(19) 

Europäisches
Patentamt
European
Patent Office
Office européen
des brevets

(11) **EP 4 400 941 A1**

(12) **EUROPEAN PATENT APPLICATION**
published in accordance with Art. 153(4) EPC

(43) Date of publication:
**17.07.2024 Bulletin 2024/29**

(21) Application number: **22891777.9**

(22) Date of filing: **24.10.2022**

(51) International Patent Classification (IPC):
**G06F 3/01** (2006.01)

(52) Cooperative Patent Classification (CPC):
**G06F 3/01; G06F 3/14**

(86) International application number:
**PCT/CN2022/127013**

(87) International publication number:
**WO 2023/082980 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2021 CN 202111338178**

(71) Applicant: **Huawei Technologies Co., Ltd.
Shenzhen, Guangdong 518129 (CN)**

(72) Inventors:
• **HE, Xiaoyu
  Shenzhen, Guangdong 518129 (CN)**
• **CHEN, Qichao
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **DISPLAY METHOD AND ELECTRONIC DEVICE**

(57)     A display method and an electronic device are disclosed. The electronic device displays a first image through a first display, and displays the first image through the first display, where the first display corresponds to a first eye of a user; and displays a second image through a second display, where the second display corresponds to a second eye of the user. An overlapping region exists on each of the first image and the second image, and the overlapping region includes at least one same object. On the first image, a center point of the overlapping region is located at a first position; and on the second image, the center point of the overlapping region is located at a second position. A distance from the first position to a center point of the first image is not equal to a distance from the second position to a center point of the second image, and/or a direction from the first position to the center point of the first image is not equal to a direction from the second position to the center point of the second image. In this manner, an assembly tolerance of the displays on the electronic device (for example, a head-mounted display device) can be compensated, and a display effect can be improved.

FIG. 9

EP 4 400 941 A1

**Description**

**CROSS-REFERENCE TO RELATED APPLICATIONS**

This application claims priority to Chinese Patent Application No. 202111338178.3, filed with the China National Intellectual Property Administration on November 11, 2021 and entitled "DISPLAY METHOD AND ELECTRONIC DEVICE", which is incorporated herein by reference in its entirety.

**TECHNICAL FIELD**

This specification relates to the field of electronic technologies, and in particular, to a display method and an electronic device.

**BACKGROUND**

With development of terminal display technologies, there are more application scenarios of a virtual reality (Virtual Reality, VR) technology, an augmented reality (Augmented Reality, AR) technology, and a mixed reality (Mixed Reality, MR) technology. A VR device can simulate and generate a three-dimensional (three-dimensional, 3D) virtual world scenario, and can also provide visual, auditory, tactile, or other sensory simulation experience, so that a user feels immersive. In addition, the user may further interact with the simulated virtual world scenario. An AR device can superimpose and display a virtual image for the user when the user sees a real world scenario. The user can also interact with the virtual image to implement an augmented reality effect. MR fuses AR and VR to provide the user with a view obtained after a real world and a virtual world are combined.

A head-mounted display device is a display device worn on the head of the user, and may provide a new visual environment for the user. The head-mounted display device may present different effects such as the VR, the AR, or the MR to the user by transmitting an optical signal.

Generally, two display components are disposed on the head-mounted display device. One display component corresponds to a left eye, and the other display component corresponds to a right eye. The left-eye display component and the right-eye display component separately display images. In this way, a left eye and a right eye of a person each capture an image, and images are fused through the brain, so that the virtual world is experienced. However, in actual application, image blur, dizziness, or visual fatigue may easily occur when the user wears the head-mounted display device. This seriously affects comfort and experience of the head-mounted display device.

**SUMMARY**

An objective of this specification is to provide a display method and an electronic device, to improve comfort of a head-mounted display device.

According to a first aspect, a display method is provided, applied to an electronic device. The electronic device includes a first display and a second display. A first image is displayed through the first display, and the first display corresponds to a first eye of a user; and a second image is displayed through the second display, and the second display corresponds to a second eye of the user. An overlapping region exists on each of the first image and the second image, and the overlapping region includes at least one same object. On the first image, a center point of the overlapping region is located at a first position. On the second image, the center point of the overlapping region is located at a second position. A distance from the first position to a center point of the first image is a first distance, and a distance from the second position to a center point of the second image is a second distance. A direction from the first position to the center point of the first image is a first direction, and a direction from the second position to the center point of the second image is a second direction. The first distance is not equal to the second distance, and/or the first direction is different from the second direction.

For example, the electronic device is a head-mounted display device. Generally, an overlapping region exists on each of an image displayed on the first display and an image displayed on the second display on the head-mounted display device. For example, the overlapping region is left-right symmetrical based on a center line of a face (or a center plane of the electronic device). In other words, a first distance from a first position (a position of a center point of the overlapping region on the first display) to a center point of the first display is equal to a second distance from a second position (a position of the center point of the overlapping region on the second display) to a center point of the second display. A first direction from the first position to the center point of the first display is opposite to a second direction from the second position to the center point of the second display. Because an assembly tolerance exists in a process of producing the head-mounted display device, the first display cannot be aligned with a corresponding human eye, and/or the second display cannot be aligned with a corresponding human eye. Therefore, when the first display and the second display respectively display images, the overlapping region on the first display and the overlapping region on the second display are asymmetrical relative to the center line of the face. In this case, the user cannot fuse the overlapping regions on the two images.

In view of this, in this embodiment of this application, positions of overlapping regions on images on two displays are asymmetrical, to compensate for the assembly tolerance. For example, the first distance from the first position (the position of the center point of the overlapping region on the first image) to the center point of the first image is not equal to the second distance from the second position (the position of the center point of the overlapping region on the second image) to the center point of the second image, and/or the first direction from the first position to the center point of the first image is different from the second direction from the second position to the center point of the second image. In this way, when the first display displays the first image and the second display displays the second image, the user may fuse overlapping regions on the first image and the second image. This helps improve comfort of the head-mounted display device.

In a possible design, the electronic device further includes a first optical device and a second optical device, where the first optical device corresponds to the first display, the second optical device corresponds to the second display, and the first optical device and the second optical device are symmetrical relative to a middle plane; and the first position and the second position are symmetrical relative to the middle plane. When the first position and the second position are symmetrical relative to the middle plane, the overlapping regions can be better fused, and a better visual effect can be achieved.

In a possible design, the electronic device is a head-mounted display device. When the electronic device is worn by the user, the first position and the second position are symmetrical relative to a center line of a face of the user, so that the overlapping regions can be better fused, and a better visual effect can be achieved.

In a possible design, the first position changes with a position of the first display. For example, when the first display moves in a third direction, the overlapping region on the first image moves in a direction opposite to the third direction. In a possible design, the second position changes with a position of the second display. For example, when the second display moves in a fourth direction, the overlapping region on the first image moves in a direction opposite to the fourth direction.

In other words, the position of the first display and/or the position of the second display may change dynamically. As the display changes dynamically, a position of the overlapping region changes dynamically, to ensure that the overlapping regions can be fused.

In a possible design, before the displaying a first image through the first display and the displaying a second image through the second display, the method further includes: adjusting an interpupillary distance for the first display and the second display, where the interpupillary distance adjustment includes: The first display moves by a specific distance in a fifth direction, and the second display moves by the same distance in a sixth direction opposite to the fifth direction. The fifth direction is a direction in which the first display moves away from the second display, or the fifth direction is a direction in which the first display approaches the second display.

It should be noted that VR glasses with an assembly tolerance still have the assembly tolerance when interpupillary distance (Interpupillary Distance, IPD) adjustment is performed. For example, it is assumed that IPD adjustment is performed on the VR glasses (to be specific, a first display component and a second display component move by a same distance and move in opposite directions, for example, the first display component and the second display component move close to each other, or the first display component and the second display component move away from each other). When the first image and the second image are displayed after the IPD adjustment, a distance difference between the first distance and the second distance remains unchanged compared with that before the interpupillary distance adjustment, and a relative relationship between the first direction and the second direction remains unchanged compared with that before the interpupillary distance adjustment, to ensure that the overlapping regions can be fused before and after the IPD adjustment

In a possible design, the at least one same object includes a first object and a second object. On the first image, a first feature point of the first object is at first coordinates, and a second feature point of the second object is at second coordinates. On the second image, the first feature point of the first object is at third coordinates, and the second feature point of the second object is at fourth coordinates. A coordinate difference between the first coordinates and the third coordinates is different from a coordinate difference between the second coordinates and the fourth coordinates.

In other words, the overlapping region includes two objects, and offsets of the two objects may be different. For example, when at least one of the following conditions is met, the offsets of the two objects are different, and the conditions are as follows:

Condition 1: The first object is located in a region in which a point of gaze of the user is located, and the second object is not located in the region in which the point of gaze of the user is located.
Condition 2: The first object and the second object are both located in a region in which a point of gaze of the user is located, and the second object is closer to an edge of the region in which the point of gaze of the user is located than the first object.

Condition 3: A distance between the first object and the center point of the first image is less than a distance between the second object and the center of the second image.

Condition 4: A quantity of times of user interaction corresponding to the first object is greater than a quantity of times of user interaction corresponding to the second object.

Condition 5: The first object is a user-specified object, and the second object is not a user-specified object.

In this embodiment of this application, the second object is an object that the user pays little attention or an object that the user is not interested in (a quantity of times of interaction is low). Therefore, an offset of the second object is small, or no offset is performed on the second object. This does not affect perception of the user, a calculation amount of the electronic device can be reduced, and efficiency can be improved.

In a possible design, the method further includes: The electronic device includes a first display module and a second display module, the first display module includes the first display and a first optical device, the second display module includes the second display and a second optical device, a first offset exists between a position of the first display and a position of the first optical device, and a second offset exists between a position of the second display and a position of the second optical device. The method further includes: obtaining three-dimensional image data; obtaining a first coordinate conversion matrix and a second coordinate conversion matrix, where the first coordinate conversion matrix corresponds to the first optical device, and the second coordinate conversion matrix corresponds to the second optical device; obtaining the first offset and the second offset; processing the three-dimensional image data into the first image based on the first coordinate conversion matrix and the first offset; and processing the three-dimensional image data into the second image based on the second coordinate conversion matrix and the second offset. It may be understood that the first image and the second image are obtained from the same three-dimensional image data, and are obtained through conversion based on positions of the first optical device (corresponding to a position of a first human eye) and the second optical device (corresponding to a position of a second human eye). This helps fuse overlapping regions on the first image and the second image, to ensure that the user can clearly see a virtual environment.

In a possible design, when a position of the first display module changes, the first coordinate conversion matrix changes; or when a position of the second display module changes, the second coordinate conversion matrix changes. When the position of the human eye changes, the display module usually changes with the position of the human eye, so that an angle of view of the display may be adjusted based on a position change of the human eye.

According to a second aspect, a calibration method is further provided, applied to a calibration apparatus. The calibration apparatus includes an image shooting module. The method includes: when a first display of a to-be-calibrated electronic device displays a first image and a second display displays a second image, obtaining a third image by shooting the first display by using the image shooting module, and obtaining a fourth image by shooting the second display. There is an overlapping region on the first image and the second image, the overlapping region includes at least one same object, the at least one same object includes one calibration object, and a center point of the overlapping region on the first image is located at a first position; and a center point of the overlapping region on the second image is located at a second position. A distance from the first position to the center of the first image is equal to a distance from the second position to the center of the second image, and a direction from the first position to the center of the first image is equal to a direction from the second position to the center of the second image. The third image and the fourth image are fused to obtain a fifth image, where the fifth image includes two calibration objects. A first offset of the first display and/or a second offset of the second display is/are determined based on a distance difference between the two calibration objects.

In this manner, assembly tolerance of the electronic device, that is, the offsets of two display components, may be calibrated, to compensate the assembly tolerance of the electronic device.

In a possible design, the first offset includes a first displacement and a first direction, and the second offset includes a second displacement and a second direction, where a sum of displacements of the first displacement and the second displacement is equal to the distance difference; and the first direction is opposite to the second direction.

In a possible design, the first displacement is half of the distance difference, and the second displacement is half of the distance difference.

In a possible design, the method further includes: writing the first offset and the second offset into the to-be-calibrated electronic device, so that the to-be-calibrated electronic device processes, based on the first offset, an image displayed on the first display; and processes, based on the second offset, an image displayed on the second display.

According to a third aspect, a display method is further provided. An electronic device includes a first display module and a second display module; the first display module includes the first display and a first optical device, the second display module includes the second display and a second optical device, and a first offset exists between a position of the first display and a position of the first optical device, and a second offset exists between a position of the second display and a position of the second optical device. The method further includes: obtaining three-dimensional image data; obtaining a first coordinate conversion matrix and a second coordinate conversion matrix, where the first coordinate conversion matrix corresponds to the first optical device, and the second coordinate conversion matrix corresponds to the second optical device; obtaining the first offset and the second offset; processing the three-dimensional image data into the first image based on the first coordinate conversion matrix and the first offset, and the first display module displays the first image; and processing the three-dimensional image data into the second image based on the second coordinate conversion matrix and the second offset, and the second display module displays the second image.

It may be understood that the first image and the second image are obtained from same three-dimensional image data, and are obtained through conversion based on positions of the first optical device (corresponding to a position of a first human eye) and the second optical device (corresponding to a position of a second human eye). This helps fuse overlapping regions on the first image and the second image, to ensure that users can clearly see a virtual environment.

In a possible design, when a position of the first display module changes, the first coordinate conversion matrix changes; or when the position of the second display module changes, the second coordinate conversion matrix changes. When the position of the human eye changes, the display module generally changes with the position of the human eye, so that an angle of view of the display may be adjusted based on a position change of the human eye.

According to a fourth aspect, an electronic device is further provided, including:

a processor, a memory, and one or more programs.

The one or more programs are stored in the memory, the one or more programs include instructions, and when the instructions are executed by the processor, the electronic device is enabled to perform the method steps provided in the first aspect.

According to a fifth aspect, a calibration apparatus is further provided, including:

a processor, a memory, and one or more programs.

The one or more programs are stored in the memory, the one or more programs include instructions, and when the instructions are executed by the processor, the electronic device is enabled to perform the method steps provided in the second aspect.

According to a sixth aspect, a system is further provided, including:

an electronic device configured to perform the method steps according to the first aspect; and
a calibration apparatus configured to perform the method steps according to the second aspect.

According to a seventh aspect, a computer-readable storage medium is further provided. The computer-readable storage medium is configured to store a computer program, and when the computer program runs on a computer, the computer is enabled to perform the method according to the first aspect or the second aspect.

According to an eighth aspect, a computer program product is further provided, including a computer program. When the computer program runs on a computer, the computer is enabled to perform the method according to the first aspect or the second aspect.

## BRIEF DESCRIPTION OF DRAWINGS

FIG. 1 is a schematic diagram of a VR system according to an embodiment of this specification;
FIG. 2A and FIG. 2B are schematic diagrams of a structure of a VR head-mounted display device according to an embodiment of this specification;
FIG. 3A is another schematic diagram of a structure of a VR head-mounted display device according to an embodiment of this specification;
FIG. 3B is a schematic diagram of a software structure of a VR head-mounted display device according to an embodiment of this specification;
FIG. 4A and FIG. 4B are schematic diagrams of a human eye observation mechanism according to an embodiment of this specification;
FIG. 5 is a schematic diagram of a display principle of VR glasses according to an embodiment of this specification;
FIG. 6A and FIG. 6B are a schematic diagram of binocular non-fusion according to an embodiment of this specification;
FIG. 7A and FIG. 7B are another schematic diagram of binocular non-fusion according to an embodiment of this specification;
FIG. 8A and FIG. 8B are schematic diagrams of a display method according to an embodiment of this specification;
FIG. 9 and FIG. 10 are schematic diagrams of another display method according to an embodiment of this specification;
FIG. 11 is a schematic flowchart of a display method according to an embodiment of this specification;
FIG. 12A and FIG. 12B are schematic diagrams of obtaining a two-dimensional image from a three-dimensional image according to an embodiment of this specification;
FIG. 12C and FIG. 13 are schematic diagrams of a calibration method according to an embodiment of this specification;

FIG. 14 is another schematic flowchart of a display method according to an embodiment of this specification;

FIG. 15 is a schematic diagram in which an assembly tolerance exists according to an embodiment of this specification; and

FIG. 16 is a schematic diagram of an electronic device according to an embodiment of this specification.

## DESCRIPTION OF EMBODIMENTS

In the following, some terms in embodiments of this application are explained and described, to facilitate understanding of a person skilled in the art.

In embodiments of this application, "at least one" means one or more, and "a plurality of" means two or more. In addition, it should be understood that in description of this specification, terms such as "first" and "second" are merely used for distinguishing and description, but should not be understood as indicating or implying relative importance, or should not be understood as indicating or implying a sequence. For example, a first object and a second object do not represent importance of the first object and the second object or represent an order of the first object and the second object, and are merely used to distinguish descriptions. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

In the description of embodiments of this application, it should be noted that, unless otherwise explicitly specified and limited, the terms "installation" and "connection" should be understood in a broad sense. For example, the "connection" may be a detachable connection, or may be a non-detachable connection; may be a direct connection or an indirect connection through an intermediate medium. Orientation terms mentioned in embodiments of this application, for example, "top", "bottom", "left", "right", "inside", and "outside", are merely directions based on the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application. "A plurality of" means at least two.

References to "one embodiment" or "some embodiments" or the like described in this specification mean that one or more embodiments of this specification include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A virtual reality (Virtual Reality, VR) technology is a human-machine interaction means created by using computer and sensor technologies. The VR technology integrates a plurality of scientific technologies, such as a computer graphics technology, a computer simulation technology, a sensor technology, and a display technology, and can create a virtual environment. The virtual environment includes a computer-generated two-dimensional or three-dimensional virtual obj ect that is dynamically played in real time, and provides a user with simulations of senses such as vision, so that the user feels immersive. In addition to a visual sensation generated by using the computer graphics technology, there are sensations such as hearing, touch, force sensing, movement, and even smell, taste, and the like. These are also referred to as multi-sensation. In addition, a head rotation, an eye, a gesture, or another human body behavior and action of the user may be detected, and a computer processes data adapted to the action of the user, makes a real-time response to the action of the user, and feeds back the action of the user to facial features of the user separately, to further form a virtual environment. For example, the user may view a VR game interface by wearing a VR head-mounted display device (for example, VR glasses or a VR helmet), and may interact with the VR game interface by performing an operation by using a gesture, a handle, or the like, as if the user were in a game.

An augmented reality (Augmented Reality, AR) technology is to superimposing a computer-generated virtual object on a real-world scenario to enhance the real world. In other words, in the AR technology, the real-world scenario needs to be collected, and then the virtual environment is added to the real world. Therefore, a difference between the VR technology and the AR technology lies in that in the VR technology, a complete virtual environment is created, and all the user sees are virtual objects, but in the AR technology, a virtual object is superimposed on the real world, that is, both an object in the real world and a virtual object can be seen. For example, the user wears transparent glasses, and can see a surrounding real environment by using a lens of the glasses, and the virtual object may be further displayed on the lens. In this way, the user can see both the real object and the virtual object.

A mixed reality (Mixed Reality, MR) technology is to introduce reality scenario information (or referred to as real scenario information) into a virtual environment, and build a bridge of information interaction and feedback between the virtual environment, the real world, and the user, to enhance a sense of reality of user experience. Specifically, a real object is virtualized (for example, a camera is used to scan the real object for three-dimensional reconstruction to generate a virtual object), and a virtualized real object is introduced into the virtual environment, so that the user can see the real object in the virtual environment.

Binocular fusion (binocular fusion), also known as binocular visual fusion, is a visual phenomenon. To be specific, when two eyes observe a same object at the same time, two images of the object are formed on retinas of the two eyes respectively, then transmitted to a same region of a cortex visual center through optic nerves on both sides, and fused into a complete perceptual experience of a single object image.

In this specification, the virtual image or the virtual environment may include various objects (objects), and the objects may also be referred to as targets. The objects may include an object or thing that may appear in a real-world environment, for example, a person, an animal, or furniture. The objects may further include a virtual element like a virtual icon, a navigation bar, a software button, a window, or the like. These virtual elements may be used to interact with the user.

It should be noted that the technical solutions provided in embodiments of this application may be applied to a head-mounted display device like a VR head-mounted display device, an AR head-mounted display device, or an MR head-mounted display device. Alternatively, in addition to the VR, the AR, and the MR, the technical solutions may be further applied to another scenario or an electronic device in which a three-dimensional environment needs to be presented to the user. A specific type of the electronic device is not limited in embodiments of this application.

For ease of understanding, the following mainly uses the VR head-mounted display device as an example for description.

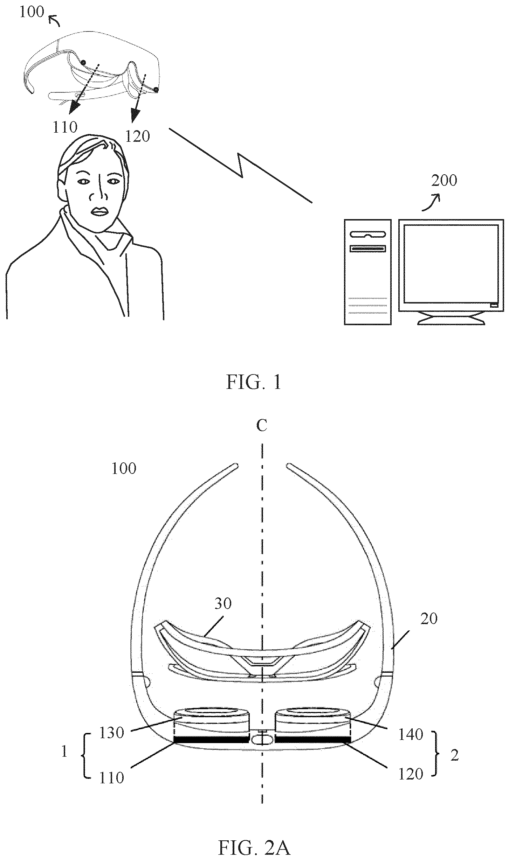

For example, a VR head-mounted display device 100 may be applied to a VR system shown in FIG. 1. The VR system includes the VR head-mounted display device 100 and a processing device 200. The VR system may be referred to as a VR split machine. The VR head-mounted display device 100 may be connected to the processing device 200. A connection between the VR head-mounted display device 100 and the processing device 200 includes a wired connection or a wireless connection. The wireless connection may be a connection in Bluetooth (Bluetooth, BT): conventional Bluetooth or Bluetooth low energy BLE Bluetooth, or may be a connection in a wireless local area network (wireless local area network, WLAN) (for example, a wireless fidelity (wireless fidelity, Wi-Fi) network), Zigbee, frequency modulation (frequency modulation, FM), a near field communication (near field communication, NFC) technology, and an infrared (infrared, IR) technology, a universal 2.4G/5G frequency band wireless communication connection, or the like.

In some embodiments, the processing device 200 may perform processing calculation. For example, the processing device 200 may generate an image, process the image (a processing manner is described later), and then send a processed image to the VR head-mounted display device for display. The processing device 200 may include a host (for example, a VR host) or a server (for example, a VR server). The VR host or the VR server may be a device with a large computing capability. For example, the VR host may be a device like a mobile phone, a tablet computer, or a laptop computer, and the VR server may be a cloud server, or the like.

In some embodiments, the VR head-mounted display device 100 may be glasses, a helmet, or the like. Generally, two display components, namely, a first display component 110 and a second display component 120, are disposed on the VR head-mounted display device 100. The display components of the VR head-mounted display device 100 may display images to human eyes. In the embodiment shown in FIG. 1, the first display component 110 and the second display component 120 are wrapped inside the VR glasses, so that arrows used to indicate the first display component 110 and the second display component 120 in FIG. 1 are represented by dotted lines.

In some embodiments, the VR head-mounted display device 100 further has functions such as image generation and image processing. In other words, the VR head-mounted display device 100 does not need the processing device 200 in FIG. 1. Such a VR head-mounted display device 100 may be referred to as an all-in-one VR headset.

FIG. 2A is a schematic diagram of the VR head-mounted display device 100. As shown in FIG. 2A, the VR head-mounted display device 100 includes a display module 1 and a display module 2. The display module 1 includes the first display component 110 and an optical device 130. The display module 2 includes the second display component 120 and an optical device 140. The display module 1 and the display module 2 may also be referred to as lens tubes. When the user wears the VR head-mounted display device 100, the display module 1 is configured to display an image to a right eye of the user, and the display module 2 is configured to display an image to a left eye of the user. It may be understood that the VR head-mounted display device 100 shown in FIG. 2A may further include other components, for example, further include a support part 30 and a bracket 20. The support part 30 is configured to support the VR head-mounted display device 100 on a nose bridge, and the bracket 20 is configured to support the VR head-mounted display device 100 on both ears, to ensure that the VR head-mounted display device 100 is stably worn.

In some embodiments, the optical device 130 and the optical device 140 are symmetrical relative to a middle plane C. In FIG. 2A, the middle plane C is a plane perpendicular to a paper surface. In some embodiments, the VR head-mounted display device 100 may be of a left-right symmetrical structure, the support part 30 and/or the bracket 20 may be separately left-right symmetrical relative to the middle plane C, and the support part 30 may fix a position of a face. This helps align the optical device 130 and the optical device 140 with the left eye and the right eye of the user respectively.

When the VR head-mounted display device 100 is worn by the user, the optical device 130 and the optical device 140 are respectively aligned with the left eye and the right eye of the user. Generally, the face is basically left-right symmetrical, and the left eye and the right eye of the human are left-right symmetrical relative to a center line of the face. When the VR head-mounted display device 100 is worn by the user, the left eye and the right eye are symmetrical relative to the middle plane C, the optical device 130 and the optical device 140 are symmetrical relative to the center line of the face, and the center line of the face is within the middle plane C. In other words, the center line of the face overlaps in the middle plane C.

In embodiments of this application, "symmetrical" may be strictly symmetrical, or a slight deviation may exist. For example, the optical device 130 and the optical device 140 may be strictly symmetrical relative to the middle plane C, or the optical device 130 and the optical device 140 may be basically symmetrical relative to the middle plane C, and there may be a specific deviation in basic symmetry, and the deviation is within a small range.

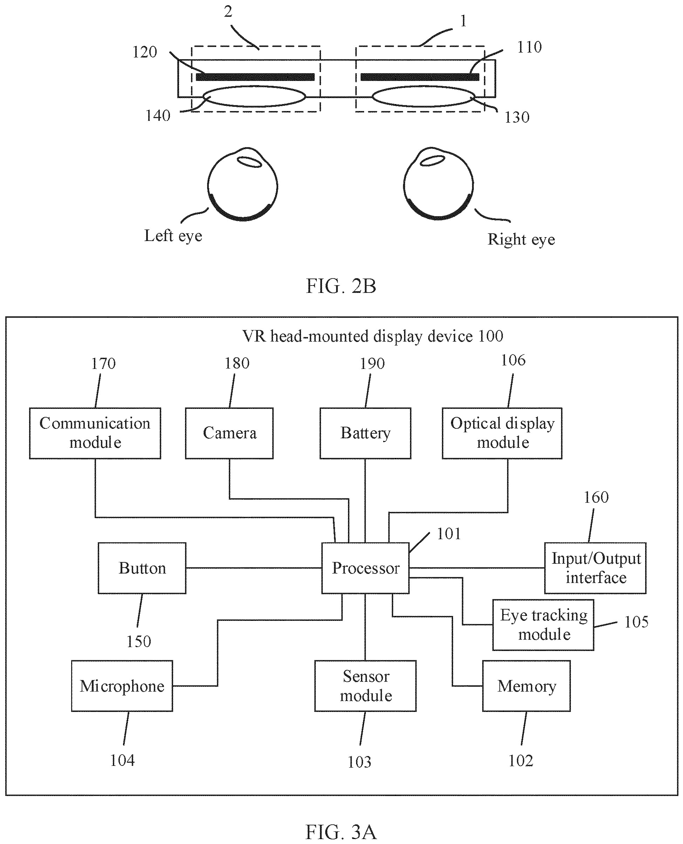

For ease of description, refer to FIG. 2B. FIG. 2B may be understood as a simplification of the VR head-mounted display device 100 in FIG. 2A. For example, in FIG. 2B, only the display module 1 and the display module 2 are shown, and other components are not shown. As shown in FIG. 2B, when the user wears the VR head-mounted display device 100, the second display component 120 is located on a side that is of the optical device 140 and that faces away from the left eye, and the first display component 110 is located on a side that is of the optical device 130 and that faces away from the right eye. The optical device 130 and the optical device 140 are symmetrical relative to a center line D of the face. When the first display component 110 displays an image, light emitted by the first display component 110 is converged to the right eye of the person through the optical device 130. When the second display component 120 displays an image, light emitted by the second display component 120 is converged to the left eye of the person through the optical device 140.

It should be noted that composition of the VR head-mounted display device 100 shown in FIG. 2A or FIG. 2B is merely a logical example. In a specific implementation, a quantity of optical devices and/or a quantity of display components may be flexibly set according to different requirements. For example, in some embodiments, the first display component 110 and the second display component 120 may be two independent display components, or may be two display regions on a same display component. In some embodiments, the first display component 110 and the second display component 120 each may be a display, for example, a liquid crystal display, a light-emitting diode (light-emitting diode, LED) display, or another type of display component. This is not limited in embodiments of this application. In some other embodiments, the optical device 130 and the optical device 140 may be two independent optical devices, or may be different parts on a same optical device. In some embodiments, the optical device 130 or the optical device 140 may be one or more types of optical devices such as a reflector, a transmitting mirror, an optical waveguide, or the like, or may increase a field of view. For example, the optical device 130 or the optical device 140 may be an eyepiece including a plurality of transmitting mirrors. For example, the optical device may be a Fresnel lens, an aspheric lens, and/or the like. This is not limited in embodiments of this application. Generally, the optical device 130 and the optical device 140 are respectively aligned with two eyes of the user. When IPD adjustment is performed, the two optical devices are adjusted at a same distance but in opposite directions.

To facilitate understanding of the technical solution in this specification, the following mainly uses the VR head-mounted display device 100 in FIG. 2B as an example for description, but the VR head-mounted display device in FIG. 2A may alternatively implement the technical solution (FIG. 2B is only a simplification of FIG. 2A).

It may be understood that the VR head-mounted display device 100 may further include more components. For details, refer to FIG. 3A.

For example, refer to FIG. 3A. FIG. 3A is a schematic diagram of a structure of a head-mounted display device 100 according to an embodiment of this application. The head-mounted display device 100 may be a VR head-mounted display device, an AR head-mounted display device, an MR head-mounted display device, or the like. The VR head-mounted display device is used as an example. As shown in FIG. 3A, the VR head-mounted display device 100 may include a processor 101, a memory 102, a sensor module 103 (for example, which may be configured to obtain a posture of a user), a microphone 104, a button 150, an input/output interface 160, a communication module 170, a camera 180, a battery 190, an optical display module 106, an eye tracking module 105, and the like.

The processor 101 is generally configured to control an overall operation of the VR head-mounted display device 100, and may include one or more processing units. For example, the processor 101 may include an application processor (application processor, AP), a modem processor, a graphics processing unit (graphics processing unit, GPU), an image signal processor (image signal processor, ISP), a video processing unit (video processing unit, VPU) controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 101, and is configured to store instructions and data. In some embodiments, the memory in the processor 101 is a cache memory. The memory may store an instruction or data that is used or cyclically used by the processor 101. If the processor 101 needs to use the instructions or the data again, the processor 101 may directly invoke the instructions or the data from the memory. This avoids repeated access, reduces waiting time of the processor 101, and improves system efficiency.

In some embodiments of this specification, the processor 101 may be configured to control power of the VR head-mounted display device 100. For example, the processor 101 may be configured to control power of the optical display module 106, to implement a function of adjusting the power of the head-mounted display device 100. For example, the processor 101 may adjust relative positions between optical devices (such as lenses) in the optical display module 106, so that the power of the optical display module 106 is adjusted, and when the optical display module 106 performs imaging to a human eye, a position of a corresponding virtual image surface may be adjusted. Therefore, an effect of controlling the power of the head-mounted display device 100 is achieved.

In some embodiments, the processor 101 may include one or more interfaces. The interface may include an inter-integrated circuit (inter-integrated circuit, I2C) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, a serial peripheral interface (serial peripheral interface, SPI), and/or the like.

The I2C interface is a bidirectional synchronous serial bus that includes a serial data line (serial data line, SDA) and a serial clock line (serail clock line, SCL). In some embodiments, the processor 101 may include a plurality of groups of I2C buses.

The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 101 and the communication module 170. For example, the processor 101 communicates with a Bluetooth module in the communication module 170 through the UART interface, to implement a Bluetooth function.

The MIPI interface may be configured to connect the processor 101 to peripheral components such as a display component in the optical display module 106, and the camera 180.

The GPIO interface may be configured by software. The GPIO interface may be configured as a control signal or a data signal. In some embodiments, the GPIO interface may be configured to connect the processor 101 to the camera 180, the display component in the optical display module 106, the communication module 170, the sensor module 103, the microphone 104, and the like. The GPIO interface may alternatively be configured as an I2C interface, an I2S interface, a UART interface, an MIPI interface, or the like. In some embodiments, the camera 180 may capture an image including a real object, and the processor 101 may fuse the image captured by the camera with a virtual object, and the optical display module 106 is used to display an image obtained through fusion. In some embodiments, the camera 180 may further capture an image that includes a human eye. The processor 101 performs eye tracking by using the image.

The USB interface is an interface that conforms to a USB standard specification, and may be specifically a mini USB interface, a micro USB interface, a USB type-C interface, or the like. The USB interface may be configured to connect to a charger to charge the VR head-mounted display device 100, or may be configured to transmit data between the VR head-mounted display device 100 and a peripheral device, or may be configured to connect to a headset for playing audio through the headset. The interface may be further configured to connect to another electronic device such as a mobile phone. The USB interface may be a USB 3.0, and is configured to be compatible with high-speed display interface (display interface, DI) signal transmission, and may transmit high-speed audio and video data.

It may be understood that an interface connection relationship between the modules shown in this embodiment of this application is merely an example for description, and does not constitute a limitation on the structure of the head-mounted display device 100. In some other embodiments of this specification, the head-mounted display device 100 may alternatively use different interface connection manners or a combination of a plurality of interface connection manners in the foregoing embodiment.

In addition, the VR head-mounted display device 100 may include a wireless communication function. For example, the VR head-mounted display device 100 may receive an image from another electronic device (such as a VR host) for display, or the VR head-mounted display device 100 may directly obtain data from a station such as a base station. The communication module 170 may include a wireless communication module and a mobile communication module. The wireless communication function may be implemented through an antenna (not shown), the mobile communication module (not shown), the modem processor (not shown), the baseband processor (not shown), or the like. The antenna is configured to transmit and receive an electromagnetic wave signal. The VR head-mounted display device 100 may include a plurality of antennas, and each antenna may be configured to cover one or more communication frequency bands. Different antennas may be further multiplexed to improve antenna utilization. For example, an antenna 1 may be multiplexed as a diversity antenna of a wireless local area network. In other embodiments, the antenna may be used in combination with a tuning switch.

The mobile communication module may provide a wireless communication solution applied to the VR head-mounted display device 100, including a second generation (2nd generation, 2G) network/third generation (3rd generation, 3G) network/fourth generation (4th generation, 4G) network/fifth generation (5th generation, 5G) network/sixth generation (6th generation, 6G) network. The mobile communication module may include at least one filter, a switch, a power amplifier, a low noise amplifier (low noise amplifier, LNA), and the like. The mobile communication module may receive an electromagnetic wave through the antenna, perform processing such as filtering or amplification on the received electromagnetic wave, and transmit the electromagnetic wave to the modem processor for demodulation. The mobile communication module may further amplify a signal modulated by the modem processor, and convert the signal into an electromagnetic wave for radiation through the antenna. In some embodiments, at least some function modules in the mobile communication module may be disposed in the processor 101. In some embodiments, at least some function modules of the mobile communication module may be disposed in a same device as at least some modules of the processor 101.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to a speaker or the like), or displays an image or a video by using the display component in the optical display module 106. In some embodiments, the modem processor may be an independent component. In some other embodiments, the modem processor may be independent of the processor 101, and is disposed in a same device as the mobile communication module or another function module.

The wireless communication module may provide a wireless communication solution applied to the VR head-mounted display device 100, including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology, and the like. The wireless communication module may be one or more components integrating at least one communication processor module. The wireless communication module receives an electromagnetic wave through the antenna, performs frequency modulation and filtering processing on an electromagnetic wave signal, and sends a processed signal to the processor 101. The wireless communication module may further receive a to-be-sent signal from the processor 101, perform frequency modulation and amplification on the signal, and convert the signal into an electromagnetic wave for radiation through the antenna.

In some embodiments, an antenna of the VR head-mounted display device 100 is coupled to the mobile communication module, so that the VR head-mounted display device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G, 6G, BT, a GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The VR head-mounted display device 100 implements a display function by using the GPU, the optical display module 106, the application processor, and the like. The GPU is a microprocessor for image processing, and is connected to the optical display module 106 and the application processor. The GPU is used to perform mathematical and geometric calculations, and render an image. The processor 101 may include one or more GPUs that execute program instructions to generate or change display information.

The memory 102 may be configured to store computer-executable program code. The executable program code includes instructions. The processor 101 runs the instructions stored in the memory 102, to perform various function applications of the VR head-mounted display device 100 and data processing. The memory 102 may include a program storage area and a data storage area. The program storage area may store an operating system, an application required by at least one function (for example, a sound playing function or an image playing function), and the like. The data storage area may store data (such as audio data and a phone book) created in a process of using the head-mounted display device 100. In addition, the memory 102 may include a high-speed random access memory, or may include a nonvolatile memory, for example, at least one magnetic disk storage device, a flash memory, or a universal flash storage (universal flash storage, UFS).

The VR head-mounted display device 100 may implement an audio function, for example, music playing and recording, through the audio module, the speaker, the microphone 104, the headset jack, the application processor, and the like. The audio module is configured to convert digital audio information into an analog audio signal for output, and is also configured to convert analog audio input into a digital audio signal. The audio module may be further configured to encode and decode an audio signal. In some embodiments, the audio module may be disposed in the processor 101, or some function modules in the audio module are disposed in the processor 101. The speaker, also referred to as a "loudspeaker", is configured to convert an audio electrical signal into a sound signal. The head-mounted display device 100 may receive music sounds or a hands-free phone call through the speaker.

The microphone 104, also referred to as a "mike" or a "microphone", is configured to convert a sound signal into an electrical signal. The VR head-mounted display device 100 may be provided with at least one microphone 104. In some other embodiments, the VR head-mounted display device 100 may be provided with two microphones 104. In addition to collecting a sound signal, a noise reduction function may alternatively be implemented. In some other embodiments, three, four, or more microphones 104 may alternatively be disposed in the VR head-mounted display device 100, to collect a sound signal, implement noise reduction, and identify a sound source, to implement a directional recording function and the like.

The headset jack is used to connect a wired headset. The headset jack may be a USB interface, or may be a 3.5 mm (mm) open mobile terminal platform (open mobile terminal platform, OMTP) standard interface, or a cellular telecommunications industry association of the USA (cellular telecommunications industry association of the USA, CTIA) standard interface.

In some embodiments, the VR head-mounted display device 100 may include one or more buttons 150. These buttons may control the VR head-mounted display device, and provide a function of interacting with the VR head-mounted display device 100 for a user. The button 150 may be in a form of a button, a switch, a dial, and a touch or proximity touch sensing device (for example, a touch sensor). Specifically, for example, the user may turn on the optical display module 106 of the VR head-mounted display device 100 by pressing a button. The button 150 includes a power button, a volume button, and the like. The button 150 may be a mechanical button, or may be a touch button. The head-mounted display device 100 may receive a key input, and generate a key signal input related to a user setting and function control of the head-mounted display device 100.

In some embodiments, the VR head-mounted display device 100 may include the input/output interface 160, and the input/output interface 160 may connect another apparatus to the VR head-mounted display device 100 by using a proper component. The component may include, for example, an audio/video jack, a data connector, or the like.

The optical display module 106 is configured to present an image to the user under control of the processor 101. The optical di splay module 106 may convert real pixel image display into near-eye projection virtual image display by using one or more optical devices such as a reflector, a transmitting mirror, or an optical waveguide, to implement virtual interaction experience, or implement interaction experience combining virtual and real worlds. For example, the optical display module 106 receives image data information sent by the processor 101, and presents a corresponding image to the user.

For example, for the optical display module 106, refer to the structure shown in FIG. 2A. For example, the optical display module 106 includes two display components, namely, a first display component 110 and a second display component 120. Alternatively, for the optical display module 106, refer to the structure shown in FIG. 2B. For example, the optical display module 106 includes a display module 1 and a display module 2, the display module 1 includes a first display component 110 and an optical device 130, and the display module 2 includes a second display component 120 and an optical device 140.

In some embodiments, the VR head-mounted display device 100 may further include an eye tracking module 1200. The eye tracking module 1200 is configured to track a motion of a human eye, and further determine a point of gaze of the human eye. For example, an image processing technology may be used to locate a position of a pupil, center coordinates of the pupil are obtained, and the point of gaze of a person is further calculated. In some embodiments, an eye tracking system may determine a point of gaze position of the user (or determine a line-of-sight direction of the user) by using a method such as a video eye diagram method, a photodiode response method, or a pupil corneal reflection method, to implement eye tracking of the user.

In some embodiments, an example in which the line-of-sight direction of the user is determined by using the pupil corneal reflection method is used. The eye tracking system may include one or more near-infrared light-emitting diodes (Light-Emitting Diodes, LEDs) and one or more near-infrared cameras. The near-infrared LED and the near-infrared camera are not shown in FIG. 3A. In different examples, the near-infrared LED may be disposed around an optical device to fully illuminate the human eye. In some embodiments, a center wavelength of the near-infrared LED may be 850 nm or 940 nm. The eye tracking system may obtain the line-of-sight direction of the user by using the following method: illuminating the human eye by using the near-infrared LED, taking an eyeball image by using the near-infrared camera, and then based on a position of a reflective point of the near-infrared LED on a cornea and a pupil center in the eyeball image, determining an optical axis direction of the eyeball, to obtain the line-of-sight direction of the user.

It should be noted that, in some embodiments of this specification, respective corresponding eye tracking systems may be set for both eyes of the user, to synchronously or asynchronously perform eye tracking on the eyes. In some other embodiments of this specification, the eye tracking system may be disposed only near a single eye of the user, and a line-of-sight direction corresponding to the human eye is obtained by using the eye tracking system, and based on a relationship between two-eye point of gazes (for example, when the user observes an object through both eyes, the positions of the point of gazes of the two eyes are generally similar or the same), and with reference to a distance between the two eyes of the user, a line-of-sight direction or a point of gaze position of the other eye of the user may be determined.

It may be understood that the structure shown in this embodiment of this application does not constitute a specific limitation on the VR head-mounted display device 100. In some other embodiments of this specification, the VR head-mounted display device 100 may include more or fewer components than those in FIG. 3A, or combine some components, or split some components, or have different component arrangements. This is not limited in this embodiment of this application.

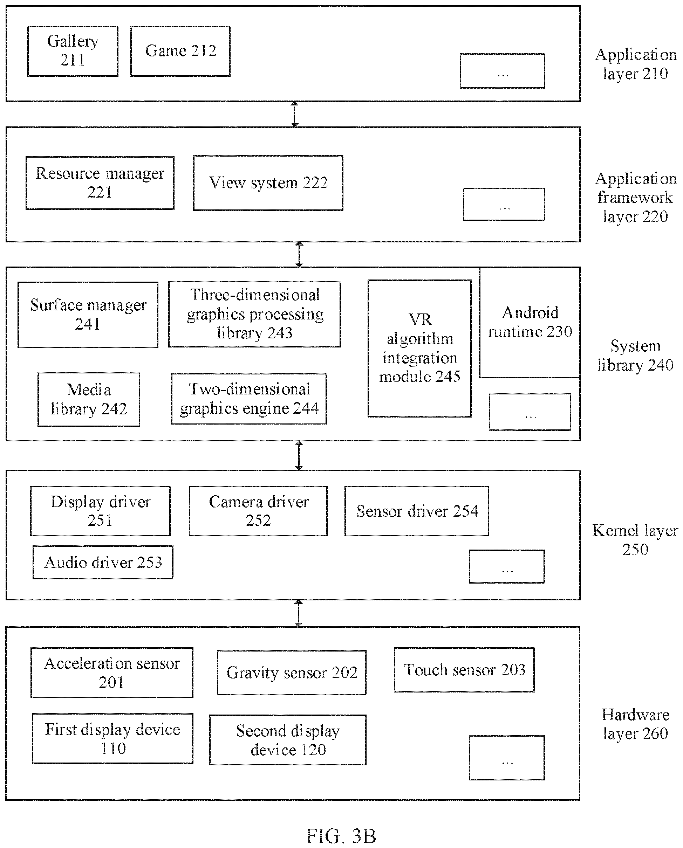

FIG. 3B is a block diagram of a software structure of a VR head-mounted display device 100 according to an embodiment of this application.

As shown in FIG. 3B, the software structure of the VR head-mounted display device 100 may be a hierarchical architecture. For example, software may be divided into several layers, and each layer has a clear role and task. Layers communicate with each other through a software interface. In some embodiments, there are five layers: an application layer 210, an application framework (framework, FWK) layer 220, an Android runtime (Android runtime) 230, a system library 240, a kernel layer 250, and a hardware layer 260 from top to bottom.

The application layer 210 may include a series of application packages. For example, as shown in FIG. 3B, the application layer includes a gallery 211 application, a game 212 application, and the like.

The application framework layer 220 provides an application programming interface (application programming interface, API) and a programming framework for an application at the application layer. The application framework layer may include some predefined functions. As shown in FIG. 3B, the application framework layer may include a resource manager 221, a view system 222, and the like. For example, the view system 222 includes visualized controls, such as a control for displaying a text, a control for displaying a picture, and the like. The view system 222 may be used to build an application. A display interface may include one or more views. For example, a display interface including a message notification icon may include a view for displaying a text and a view for displaying a picture. The resource manager 221 provides various resources for the application, such as a localized string, an icon, a picture, a layout file, a video file, and the like.

The Android runtime 230 includes a kernel library and a virtual machine. The Android runtime 230 is responsible for scheduling and management of the Android system. The kernel library includes two parts: one is a functional function that the java language needs to call, and the other is the kernel library of Android. The application layer and the application framework layer run in the virtual machine. The virtual machine executes java files in the application layer and the application framework layer as binary files. The virtual machine is used to perform functions such as object life cycle management, stack management, thread management, security and exception management, and garbage collection.

The system library 240 may include a plurality of functional modules, for example, a surface manager (surface manager) 241, a media library (media library) 242, a three-dimensional graphics processing library (for example, OpenGL ES) 243, and a 2D graphics engine 244 (for example, SGL). The surface manager 241 is configured to manage a display subsystem, and provides a fusion of 2D and 3D layers for a plurality of applications. The media library supports playback and recording in a plurality of commonly used audio and video formats, and static image files. The media library 242 may support a plurality of audio and video encoding formats, for example, MPEG 4, H.264, MP3, AAC, AMR, JPG, PNG, and the like. The three-dimensional graphics processing library 243 is configured to implement three-dimensional graphics drawing, image rendering, composition, layer processing, and the like. The 2D graphics engine 244 is a drawing engine for 2D drawing.

In addition, the system library 240 may further include a VR algorithm integration module 245. The VR algorithm integration module 245 includes a first offset of a first display component, a second offset of a second display component, a coordinate conversion matrix, a related algorithm for performing coordinate conversion based on the coordinate conversion matrix, and the like. The first offset, the second offset, the coordinate conversion matrix, and the like are described in detail later. It should be noted that, in FIG. 3B, that the VR algorithm integration module 245 is in the system library is used as an example. It may be understood that the VR algorithm integration module 245 may alternatively be located at another layer, for example, the application framework layer 220. This is not limited in this embodiment of this application.

The kernel layer 250 is a layer between hardware and software. The kernel layer 250 includes at least a display driver 251, a camera driver 252, an audio driver 253, a sensor driver 254, and the like.

The hardware layer may include a first display component 110, a second display component 120, and various sensor modules, for example, an acceleration sensor 201, a gravity sensor 202, and a touch sensor 203.

It may be understood that the software structure shown in FIG. 3B does not constitute a specific limitation on the software structure of the VR head-mounted display device 100. For example, in some other embodiments, the software structure of the VR head-mounted display device 100 may include more or fewer layers than those in FIG. 3B, for example, further include an adaptation layer, where the adaptation layer is located between the application framework layer 220 and the system library 240. The adaptation layer is used to implement adaptation between an upper layer (namely, the application framework layer) and a lower layer (namely, the system library), for example, implement interface matching between the upper layer and the lower layer, to ensure that the upper layer and the lower layer can perform data communication.

Using the software structure shown in FIG. 3B as an example, an example procedure of a display method provided in this application includes the following.

After the game 212 application in the application layer 210 is started, the system library 240 is invoked through the framework layer 220. The system library 240 converts a three-dimensional image generated by the game 212 application into a first planar image and a second planar image, where the first planar image corresponds to the first display component 110 and the second planar image corresponds to the second display component 120. The system library obtains the first offset and the second offset in the VR algorithm integration module 240, performs processing (for example, coordinate conversion processing) on the first planar image by using the first offset to obtain a third planar image, and performs processing (for example, coordinate conversion processing) on the second planar image by using the second offset to obtain a fourth planar image. The system library 240 drives the first display component 110 to display the third planar image and the second display component 120 to display the fourth planar image by using the display driver 251 in the kernel layer, to display a virtual environment to the user by using the third planar image and the fourth planar image.

For ease of description, the following uses an example in which the VR head-mounted display device 100 is VR glasses for description.

To clearly describe the technical solutions of this specification, the following briefly describes a human vision generation mechanism.

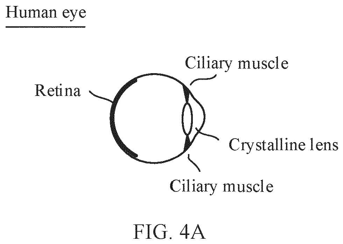

FIG. 4A is a schematic diagram of composition of a human eye. As shown in FIG. 4A, the human eye may include a crystalline lens a ciliary muscle, and a retina that is located at a fundus of the eye. The crystalline lens may function as a zoom lens, and perform convergence processing on light emitted into the human eye, to converge incident light on the retina of the fundus of the human eye, so that a scene in an actual scene can be clearly imaged on the retina. The ciliary muscle can be used to adjust a shape of the crystalline lens. For example, the ciliary muscle can adjust a diopter of the crystalline lens by contracting or relaxing, to achieve an effect of adjusting a focal length of the crystalline lens. In this way, objects at different distances in the actual scene can be clearly imaged on the retina through the crystalline lens.

In a real world, when a user (who does not wear a head-mounted electronic device like VR glasses) sees an object, a left eye and a right eye have different viewing angles. Therefore, images captured by the left eye and the right eye are different. Generally, field-of-view ranges of the left eye and the right eye overlap. Therefore, there is an overlapping region on the images captured by the left eye and the right eye, and the overlapping region includes an image of an object located in an overlapping range of the fields of view of both eyes of the user.

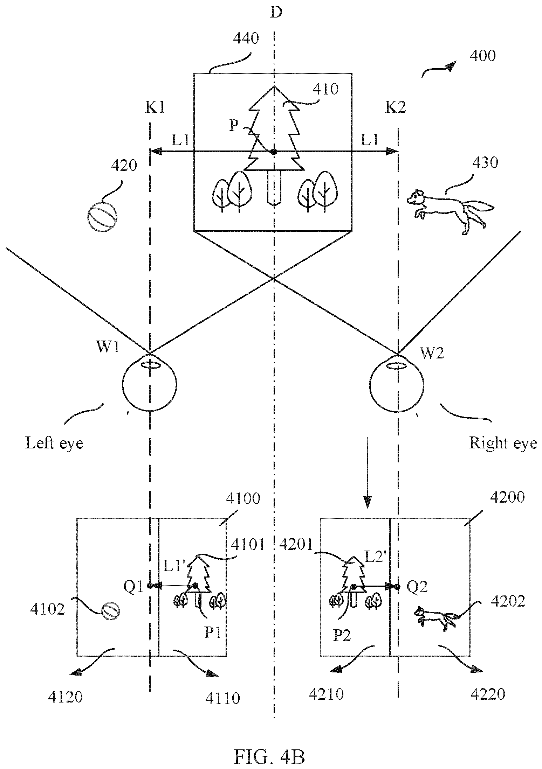

For example, refer to FIG. 4B. A real environment 400 includes a plurality of observed objects, such as a tree 410, a football 420, and a dog 430. When the user observes the real environment 400, it is assumed that the football 420 is within a field-of-view range of the left eye but not within a field-of-view range of the right eye, the tree 410 is within a field-of-view overlapping range 440 of the left eye and the right eye, and the dog 430 is within the field-of-view range of the right eye but not within the field-of-view range of the left eye. In this case, the left eye captures an image 4100, that is, the image 4100 is an image formed on a retina of the left eye. The right eye captures an image 4200, that is, the image 4200 is an image formed on a retina of the right eye. There is an overlapping region on the image 4100 and the image 4200. The overlapping region includes an image of an object within the field-of-view overlapping range 440. For example, the overlapping region on the image 4100 is a region 4110, and the overlapping region on the image 4200 is a region 4210. The region 4110 includes an image 4101 of the tree 410, and the region 4210 includes an image 4201 of the tree 410 (because the tree 410 is within the field-of-view overlapping range of the left eye and the right eye). A non-overlapping region 4120 of the image 4100 includes an image 4102 of the football 420 (because the football 420 is within the field-of-view range of the left eye). Because the dog 430 is not within the field-of-view range of the left eye, the image 4100 does not include an image of the dog 430. A non-overlapping region 4220 of the image 4200 includes an image 4202 of the dog 430 (because the dog 430 is within the field-of-view range of the right eye). Because the football 420 is not within the field-of-view range of the right eye, the image 4200 does not include the image of the football 420.

It may be understood that a center point Q1 of the image 4100 is aligned with a center W1 of a left eyeball, that is, the center point Q1 and the center W1 of the left eyeball are on a same straight line K1. The straight line K1 is a line that passes through the center W1 of the left eyeball and that is perpendicular to the left eyeball. The center W1 of the left eyeball may be understood as a center of a left eye pupil. A center point Q2 of the image 4200 is aligned with a center W2 of a right eyeball, that is, Q2 and W2 are on a same straight line K2. The straight line K2 is a line that passes through the center W2 of the right eyeball and that is perpendicular to the right eyeball. The center W2 of the right eyeball may be understood as a center of a right eye pupil.

Still refer to FIG. 4B. A distance from a center point P of the field-of-view overlapping region 440 of both eyes to the straight line K1 is L1, a distance from the center point P to the straight line K2 is L2, and the distance L1 is equal to the distance L2. A direction from the center point P to the straight line K1 is opposite to a direction from the center point P to the straight line K2. Correspondingly, the overlapping region 4110 includes a center point P 1, and the point P1 is a corresponding image point of the point P on the image 4100. The overlapping region 4210 includes a center point P2, and the point P2 is a corresponding image point of the point P on the image 4200. Therefore, a distance between the point P1 and the center point Q1 of the image 4100 is L1', a distance between the point P2 and the center point Q2 of the image 4200 is L2', and the distance L1' is equal to the distance L2'. In addition, a direction from the point P1 to the point Q1 is opposite to a direction from the point P2 to the point Q2, and the center point P1 and the center point P2 are symmetrical relative to a center line D of a face, that is, the center point P1 and the center point P2 are also symmetrical relative to a middle plane. In this embodiment of this application, a center point of an image may be understood as a positive center of the image in an up-down direction, and is a positive center of the image in a left-right direction. Similarly, a center point of an overlapping region may be understood as a positive center of the overlapping region in an up-down direction, and is a positive center in a left-right direction.

After the left eye captures the image 4100, and the right eye captures the image 4200, the brain fuses the image 4100 and the image 4200 to obtain an image. The image is an image actually seen by the user. The fusion of the image 4100 and the image 4200 includes fusion of an image in the overlapping region 4110 with an image in the overlapping region 4210. For example, images of a same observed object in the overlapping region 4110 and the overlapping region 4210 are fused into one. For example, the image 4101 and the image 4201 are fused into one. In this way, the user sees that the image includes a tree, and this conforms to a real environment.

In this human vision mechanism, overlapping regions on images seen by the left eye and the right eye can be fused (that is, binocular fusion can be implemented). Therefore, a scene seen by the user is clear, ghosting does not occur (for example, a tree image has ghosting), and it is comfortable for the human eye.

In some embodiments, a head-mounted display device such as VR glasses displays a virtual environment to a user by using the human vision generation mechanism.

For ease of comparison, an example in which the virtual environment displayed by the VR glasses to the user is the environment 400 shown in FIG. 4B is used, that is, two display components of the VR glasses each display one image. The two images include images of various objects (such as the tree 410, the football 420, and the dog 430) in the environment 400. In this way, the user can feel the environment 400 through the two images.

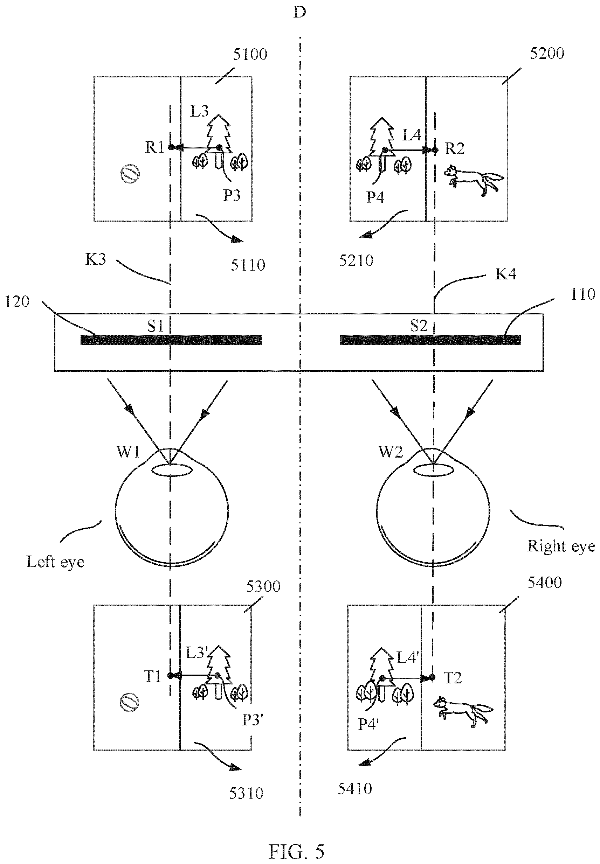

For example, as shown in FIG. 5, the VR glasses generate two images, namely, an image 5100 and an image 5200. The image 5100 and the image 5200 include images of various objects (for example, the tree 410, the football 420, and the dog 430) in the environment 400. The image 5100 and the image 5200 include an overlapping region. The overlapping region on the image 5100 is a region 5110, and the overlapping region on the image 5200 is a region 5210. Each object in the region 5110 is included in the region 5210, and each object in the region 5210 is also included in the region 5110. The image 5100 is displayed on a second display component 120. The image 5200 is displayed on a first display component 110. When the second display component 120 displays the image 5100, a center point R1 of the image 5100 is aligned with a center point S1 of the second display component 120, that is, R1 and S1 are on a same straight line K3. The straight line K3 is a line that passes through the center point S1 of the second display component 120 and that is perpendicular to the second display component 120. When the first display component 110 displays the image 5200, a center point R2 of the image 5200 is aligned with a center point S2 of the first display component 110, that is, R2 and S2 are on a same straight line K4. The straight line K4 is a line that passes through the center point S2 of the first display component 110 and that is perpendicular to the first display component 110. A distance from a center point P3 of the overlapping region 5110 on the image 5100 to the straight line K3 is L3. A distance from a center point P4 of the overlapping region 5210 on the image 5200 to the straight line K4 is L4. The distance L3 is equal to the distance L4. A direction from the center point P3 to the straight line K3 is opposite to a direction from the center point P4 to the straight line K4.

When the user wears the VR glasses, a center W1 of a left eyeball of the user is aligned with the center point S1 of the second display component 120, and an image 5300 is captured. That is, a center point T1 of the image 5300 is aligned with the center point S1 of the display component. In other words, the center point R1 of the image 5100, the center point S1 of the second display component 120, the center point W1 of the left eyeball of the user, and the center point T1 of the image 5300 are on the same straight line K3. The point T1 on the image 5300 is an image point corresponding to R1 on the image 5100.

When the user wears the VR glasses, a center W2 of a right eyeball of the user is aligned with the center point S2 of the first display component 110, and an image 5400 is captured. That is, a center point T2 of the image 5400 is aligned with the center point S2 of the first display component 110. In other words, the center point R2 of the image 5200, the center point S2 of the first display component 110, the center point W2 of the right eyeball of the user, and the center point T2 of the image 5400 are on the same straight line K4. The point T2 on the image 5400 is an image point corresponding to R2 on the image 5200.

The image 5300 captured by the left eye and the image 5400 captured by the right eye include an overlapping region. The overlapping region on the image 5300 is a region 5310, and the overlapping region on the image 5400 is a region 5410. The overlapping region 5310 includes a center point P3', and the point P3' is a corresponding image point of the point P3 of the image 5100 on the image 5300. The overlapping region 5410 includes a center point P4', and the point P4' is a corresponding image point of the point P4 of the image 5200 on the image 5400. A distance from the point P3' to the straight line K3 is L3'. A distance from the point P4' to the straight line K4 is L4'. The distance L3' is equal to the distance L4'. A direction from the point P3' to the straight line K3 is opposite to a direction from the point P4' to the straight line K4. The center point P3' and the center point P4' are symmetrical relative to a center line D of a face, that is, the center point P3' and the center point P4' are also symmetrical relative to a middle plane. In this way, the brain fuses the image 5300 and the image 5400 to obtain the environment 400 shown in FIG. 4B, so that a real environment can be simulated. In addition, because the image 5300 and the image 5400 can be fused, eyes of the user are comfortable. In other words, when the user wears the VR glasses, images captured by both eyes can be fused and it is comfortable for the eyes.

It should be noted that, in the embodiment shown in FIG. 5, for example, the center W1 of the left eyeball of the user is aligned with the center point S1 of the second display component 120, and the center W2 of the right eyeball of the user is aligned with the center point S2 of the first display component 110. In some embodiments, there may be a case in which a center point of at least one eyeball cannot be aligned with a center point of a corresponding display component. For example, there are three cases. Case 1: The center point W1 of the left eyeball can be aligned with the center point S1, but the center W2 of the right eyeball cannot be aligned with the center point S2. Case 2: The center point W1 of the left eyeball cannot be aligned with the center point S1, but the center point W2 of the right eyeball can be aligned with the center point S2. Case 3: The center point W1 of the left eyeball cannot be aligned with the center point S1, and the center W2 of the right eyeball cannot be aligned with the center point S2.

In a possible scenario, when a manufacturer of the VR glasses generates the VR glasses, a center of at least one display component (namely, a display) cannot be aligned with an eye due to an assembly tolerance. Alternatively, when the user uses the VR glasses, because a part is loose, a center of at least one display component cannot be aligned with an eye. For example, during assembly, a display is not aligned with a corresponding optical device. In this case, when the VR glasses are worn, the optical device is generally aligned with the eye, but the center of the display cannot be aligned with the eye.

In some embodiments, a distance between two display components of the VR glasses is adjustable, which is referred to as interpupillary distance (Interpupillary Distance, IPD) adjustment for short, to adapt to interpupillary distance changes between different users. For example, a button, a handle, or the like may be disposed on the VR glasses to adjust a distance between two display modules of the VR glasses. Positions of the display and the optical device change with positions of the display modules. For example, when a member A in a family wears the VR glasses, the member A may adjust the distance between the two display components by using the button or the handle. After the member A ends wearing the VR glasses, when a member B in the family wears the VR glasses, the distance between the two display components on the VR glasses may not match an eye spacing of the member B. In this case, the member B may readjust a spacing between the two display components (which may be understood as the spacing between the two display modules). Generally, the two display components are adjusted at a same distance but in opposite directions during IPD adjustment. For example, if the first display component 110 moves leftward by 1 centimeter, the second display component 120 moves rightward by 1 centimeter. Alternatively, if the first display component 110 moves rightward by 2 centimeters, the second display component 120 moves leftward by 2 centimeters. It should be understood that, for VR glasses having an assembly tolerance, because at least one display component of the VR glasses cannot be aligned with an eye, after IPD adjustment is performed on the VR glasses (two display components are adjusted at a same distance), there is still a case in which at least one display component cannot be aligned with the eye. Therefore, for the VR glasses having the assembly tolerance, the technical solution of this application may still be used after the IPD adjustment.

In summary, the technical solutions provided in embodiments of this application are applicable to any scenario in which the point W1 cannot be aligned with the point S1 and/or the point W2 cannot be aligned with the point S2.

The following first uses the case 1 (where the center point W1 of the left eyeball can be aligned with the center point S1, but the center W2 of the right eyeball cannot be aligned with the center point S2) as an example for description.

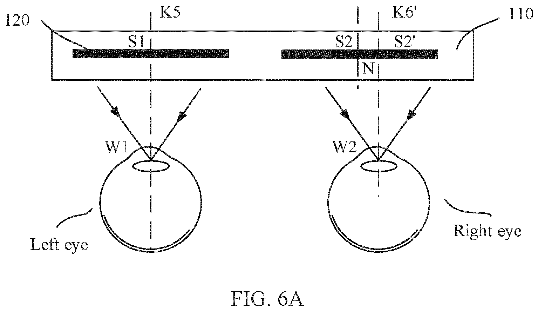

For example, refer to FIG. 6A. When the user wears the VR glasses, the center W1 of the left eyeball is aligned with the center point S1 of the second display component 120, that is, the center point S1 and the center point W1 of the left eyeball are on a same straight line K5. The straight line K5 is a line that passes through the center W1 of the left eyeball and that is perpendicular to the left eyeball. The center W2 of the right eyeball cannot be aligned with the center point S2 of the first display component 110. For example, the center point W2 of the right eyeball is aligned with a point S2' on the first display component 110 (where the point S2' is at a distance N to the right of the point S2), that is, the point W2 and the point S2' are on a same straight line K6'. The straight line K6' is a straight line that passes through the center W2 of the right eyeball and that is perpendicular to the right eyeball.

The example in which the virtual environment displayed by the VR glasses in FIG. 6A to the user is the environment 400 shown in FIG. 4B is still used, that is, two display components of the VR glasses each display one image. The two images include images of various objects (such as the tree 410, the football 420, and the dog 430) in the environment 400. In this way, the user can feel the environment 400 through the two images.

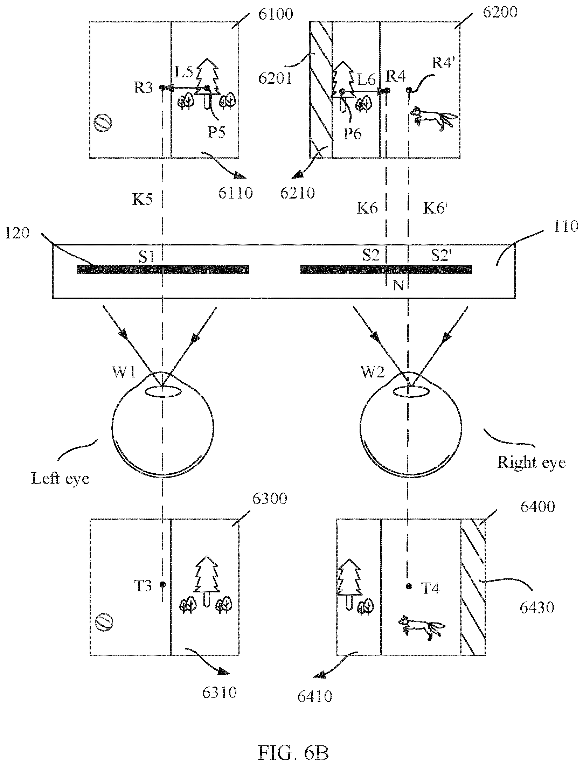

For example, as shown in FIG. 6B, the VR glasses generate two images, namely, an image 6100 and an image 6200. The image 6100 and the image 6200 include an overlapping region. The overlapping region on the image 6100 is a region 6110, and the overlapping region on the image 6200 is a region 6210. Each object in the region 6110 is included in the region 6210, and each object in the region 6210 is also included in the region 6110. The image 6100 is displayed on a second display component 120. The image 6200 is displayed on a first display component 110. When the second display component 120 displays the image 6100, a center point R3 of the image 6100 is aligned with a center point S1 of the second display component 120, that is, the center point R3 and the center point S1 are on a same straight line K5. When the first display component 110 displays the image 6200, a center point R4 of the image 6200 is aligned with a center point S2 of the first display component 110, that is, the center point R4 and the center point S2 are on a same straight line K6. The straight line K6 is a line that passes through the center point S2 of the first display component 110 and that is perpendicular to the first display component 110. The straight line K6 and a straight line K6' are different straight lines, and a distance between the straight line K6 and the straight line K6' is N. A distance from a center point P5 of the overlapping region 6110 on the image 6100 to the straight line K5 is L5. A distance from a center point P6 of the overlapping region 6210 on the image 6200 to the straight line K6 is L6. The distance L5 is equal to the distance L6. A direction from the center point P5 to the straight line K5 is opposite to a direction from the center point P6 to the straight line K6.

When the user wears the VR glasses, the center W1 of the left eyeball is aligned with the center point S1 of the second display component 120. The left eye captures an image 6300. The image 6300 includes a center point T3. The point T3 is an image point corresponding to the center point R3 on the image 6100. In other words, the point R3, the point S1, the point W1, and the point T3 are on the same straight line K5. The center W2 of the right eyeball is aligned with a point S2' on the first display component 110. S2' is aligned with a point R4' on the image 6200. The point R4' is at a distance N to the right of the center point R4. The right eye captures an image 6400. The image 6400 includes a center point T4. The point T4 is an image point corresponding to the point R4' on the image 6200. In other words, the point R4', the point S2', the point W2, and the point T4 are on the same straight line K6'.

It should be noted that, because the center W2 of the right eyeball cannot be aligned with the center point S2 of the first display component 110, the center W2 of the right eyeball cannot be aligned with the center point R4 of the image 6200, but is aligned with the point R4' at the distance N to the right of the point R4. It may be understood that the image 6200 deviates leftward by the distance N along with the first display component 110, and therefore, the right eye cannot be aligned with the center point R4 of the image 6200, but is aligned with the point R4'. In this case, some regions on the image 6200 are moved out of a line-of-sight range of the right eye. For example, a left region 6201 (a shadow region) on the image 6200 is out of the line-of-sight range of the right eye. Therefore, this part is not included on the image 6400 captured by the right eye. Because a field of view of the right eye remains unchanged (for example, 110 degrees), even if the region 6201 is out of the line-of-sight range of the right eye, a size of the image captured by the right eye remains unchanged. For example, the image 6400 includes a right region 6430 (a shadow region), and the region 6430 is not an image of the image 6200, but is a part of the image captured by the right eye. For example, there is no image of any object in the region 6430. For example, the region 6430 is a black region.

It may be understood that if the region 6201 (the shadow region) is out of the line-of-sight range of the right eye, the user cannot obtain a comfortable vision, and a vision observed by the user becomes smaller.

For understanding, FIG. 6B is compared with FIG. 5. In FIG. 5, when the user wears the VR glasses, the center W1 of the left eyeball is aligned with the center point S1 of the second display component 120, and the center W2 of the right eyeball is aligned with the center point S2 of the second display component 120. In this case, the user sees the image 5300 with the left eye, and sees the image 5400 with the right eye. The brain can fuse the overlapping region 5310 with the overlapping region 5410, so that the environment 400 can be clearly seen and it is comfortable for the human eyes. In FIG. 6B, when the user wears the VR glasses, the center point W1 of the left eyeball is aligned with the center point S1 of the second display component 120, but the center point W2 of the right eyeball cannot be aligned with the center point S2 of the first display component 110. In this case, the left eye sees the image 6300, and the right eye sees the image 6400. The brain cannot fuse the overlapping region 6310 with the overlapping region 6410. This is because the overlapping region 6410 on the image 6400 loses partial content compared with the overlapping region 5410 on the image 5400 in FIG. 5. Consequently, the overlapping region 6310 and the overlapping region 6410 cannot be completely fused. Because the overlapping regions cannot be completely fused, the user cannot clearly see the environment 400. In this case, the brain instinctively controls right-eye muscle movement to drive the right eyeball to rotate leftward and attempt to align with the center point R4 of the image 6200. In this case, the left eye looks forward, the right eye looks leftward, and inconsistent line-of-sight directions of the eyes cause vertigo and poor experience.

In FIG. 6A and FIG. 6B, the case 1 (where the point W1 can be aligned with the point S1, but W2 cannot be aligned with S2) is used as an example. It may be understood that a same principle is used in the case 2 (where the center point W1 of the left eyeball cannot be aligned with the center point S1, but the center point W2 of the right eyeball can be aligned with the center point S2). Details are not described again.

The following uses the case 3 (where the center point W1 of the left eyeball cannot be aligned with the center point S1, and the center W2 of the right eyeball cannot be aligned with the center point S2) as an example for description.

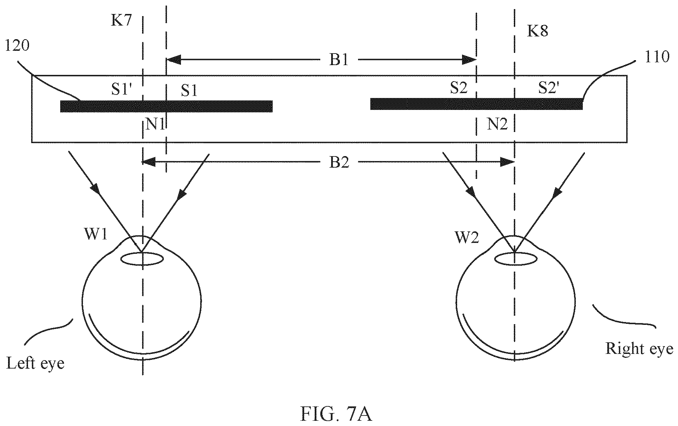

For example, refer to FIG. 7A. When the user wears the VR glasses, a distance B1 between the center point S1 of the second display component 120 and the center point S2 of the first display component 110 is less than a distance B2 between the center W1 of the left eyeball and the center W2 of the right eyeball. The distance B2 between the center W1 of the left eyeball and the center W2 of the right eyeball may also be understood as a distance between pupils, which is also referred to as an interpupillary distance (Interpupillary Distance, IPD). That is, as shown in FIG. 7A, the center W1 of the left eyeball cannot be aligned with the center point S1, and the center W2 of the right eyeball cannot be aligned with the center point S2.

For example, the center W1 of the left eyeball is aligned with a point S1' on the display component (where the point S1' is at a distance N1 to the left of the point S1), that is, the center W1 of the left eyeball and the point S1' are on a same straight line K7. The straight line K7 is a line that passes through the center W1 of the left eyeball and that is perpendicular to the center of the left eyeball. The center W2 of the right eyeball is aligned with a point S2' on the display component (where the point S2' is at a distance N2 to the right of the point S2), that is, the center W2 of the right eyeball and the point S2' are on a same straight line K8. The straight line K8 is a line that passes through the center W2 of the right eyeball and that is perpendicular to the center of the right eyeball. A distance N1 from the point S1' to the point S1 plus a distance N2 from the point S2' to the point S2 is equal to a distance difference between B1 and B2. The distance N1 may or may not be equal to the distance N2. In some embodiments, the distance N1 may not be equal to the distance N2 due to an assembly tolerance (for example, a display component assembly tolerance).

The following uses an example in which the distance N2 is greater than the distance N1 for description.

An example in which the virtual environment displayed by the VR glasses in FIG. 7A to the user is the environment 400 shown in FIG. 4B is used, that is, two display components of the VR glasses each display one image. The two images include images of various objects (such as a tree 410, a football 420, and a dog 430) in the environment 400. In this way, the user can feel the environment 400 through the two images, to simulate a real environment.

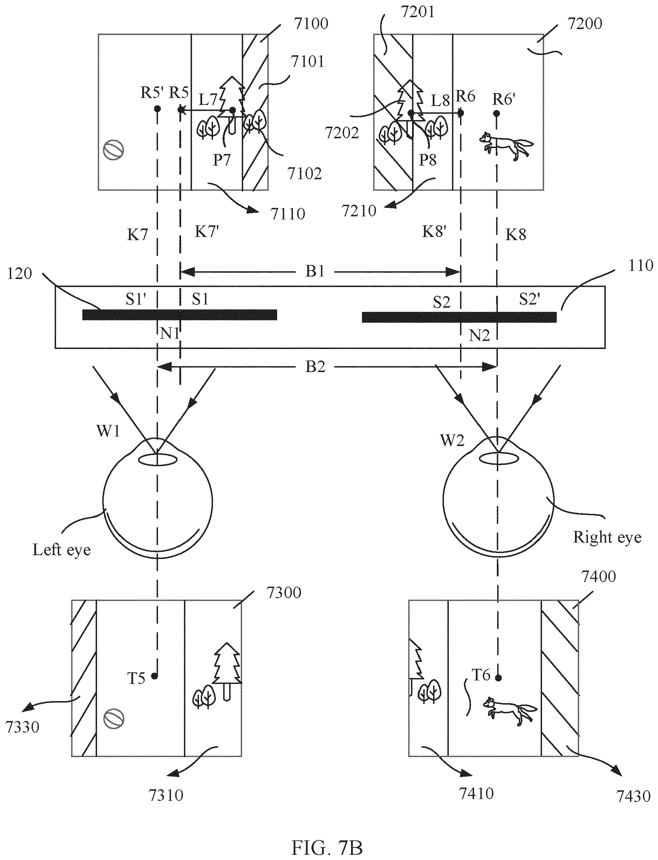

For example, refer to FIG. 7B. The VR glasses generate two images, namely, an image 7100 and an image 7200. The image 7100 and the image 7200 include an overlapping region. The overlapping region on the image 7100 is a region 7110, and the overlapping region on the image 7200 is a region 7210. A distance L7 from a center point P7 of the overlapping region 7110 to a center point R5 of the image 7100 is equal to a distance L8 from a center point P8 of the overlapping region 7210 to a center point R6 of the image 7200. In addition, a direction from the point P7 to the point R5 is opposite to a direction from the point P8 to the point R6.

The image 7100 is displayed on the second display component 120. The image 7200 is displayed on the first display component 110. When the second display component 120 displays the image 7100, the center point S1 of the second display component 120 is aligned with the center point R5 of the image 7100, that is, the center point R5 and the center point S1 are on a same straight line K7'. The straight line K7' and a straight line K7 are different straight lines, and a distance between the straight line K7' and the straight line K7 is N1. When the first display component 110 displays the image 7200, the center point S2 of the first display component 110 is aligned with the center point R6 of the image 7200, that is, the center point R6 and the center point S2 are on a same straight line K8'. The straight line K8' and a straight line K8 are different straight lines, and a distance between the straight line K8' and the straight line K8 is N2. N2 is greater than N1.

When the user wears the VR glasses, the center W1 of the left eyeball is aligned with a point S1' on the display component. The point S1' is aligned with a point R5' on the image 7100. The point R5' is at a distance N1 to the left of the center point R5. The left eye captures an image 7300. The image 7300 includes a center point T5. The point T5 is an image point corresponding to the point R5' on the image 7100. In other words, the point R5', the point S1', the point W1, and the point T5 are on the same straight line K7.

When the user wears the VR glasses, the center W2 of the right eyeball is aligned with the point S2' on the first display component 110. The point S2' is aligned with a point R6' on the image 7200. The point R6' is at a distance N2 to the right of the center point R6 on the image 7200. The right eye captures an image 7400. The image 7400 includes a center point T6. The point T6 is an image point corresponding to R6' on the image 7200. In other words, the point R6', the point S2', the point W2, and the point T6 are on the same straight line K8.

The image 7100 is compared with the image 7300. Because the image 7100 deviates rightward by the distance N1 along with the second display component 120 relative to a corresponding optical device 140, the left eye cannot be aligned with the center point R5 of the image 7100, but is aligned with the point R5' at the distance N1 to the left of the center point R5. In this case, a right region 7101 (a shadow region) on the image 7100 is out of a line-of-sight range of the left eye. For example, the left region 7101 includes an image 7102 (which may be understood as an object 7102) of a small tree, and the image 7102 is out of the line-of-sight range of the left eye. Therefore, the image 7300 captured by the left eye does not include the image 7102 of the small tree. Because a field of view of the left eye remains unchanged (for example, 110 degrees), even if the region 7101 is out of the line-of-sight range of the left eye, a size of an image captured by the left eye remains unchanged. For example, the image 7300 includes a left region 7330 (a shadow region), and the region 7330 is not an image of the image 7100, but is a part of the image captured by the left eye. For example, there is no image of any object in the region 7330. For example, the region 7330 is a black region. It may be understood that if the region 7101 (the shadow region) is out of the line-of-sight range of the left eye, the user cannot obtain a comfortable vision, and a vision observed by the user becomes smaller. In other words, after the image 7300 and the image 7400 are fused, the image 7102 of the small tree cannot be seen, and this affects VR experience.

The image 7200 is compared with the image 7400. Because the image 7200 deviates leftward by the distance N2 along with the first display component 110 relative to a corresponding optical device 130, the right eye cannot be aligned with the center point R6 of the image 7200, but is aligned with the point R6' at the distance N2 to the right of the center point R6. Therefore, a left region 7201 (a shadow region) on the image 7200 is out of a line-of-sight range of the right eye. For example, the right region 7201 includes a part (for example, a left part) of an image 7202 of the tree, and this part is out of the line-of-sight range of the right eye. Therefore, the image 7400 captured by the right eye includes only a part that is of the image 7202 of the tree and that is not located in the region 7201. Because a field of view of the right eye remains unchanged (for example, 110 degrees), even if the region 7201 is out of the line-of-sight range of the right eye, a size of an image captured by the right eye remains unchanged. For example, the image 7400 includes a right region 7430 (a shadow region), and the region 7430 is not an image of the image 7200, but is a part of the image captured by the right eye. For example, there is no image of any object in the region 7430. For example, the region 7430 is a black region. It may be understood that if the region 7201 (the shadow region) is out of the line-of-sight range of the right eye, the user cannot obtain a comfortable vision, and a vision observed by the user becomes smaller. This affects VR experience.

For example, N2 is greater than N1, and a width of the region 7201 that is out of the line-of-sight range of the right eye on the image 7200 is greater than a width of the region 7101 that is out of the line-of-sight range of the left eye on the image 7100. Correspondingly, a width of the region 7430 on the image 7400 captured by the right eye is greater than a width of the region 7330 on the image 7300 captured by the left eye.

In FIG. 7B, the brain cannot fuse the overlapping regions of the image 7300 and the image 7400. Because objects included in an overlapping region 7310 on the image 7300 and an overlapping region 7410 on the image 7400 are not exactly the same. For example, only half of the image of the tree is included on the overlapping region 7410. Therefore, the overlapping region 7310 and the overlapping region 7410 cannot be completely fused. Because the overlapping region 7310 and the overlapping region 7410 cannot be completely fused, the user cannot clearly see the environment 400. In this case, the brain instinctively controls left-eye muscle movement to drive the left eyeball to rotate rightward to attempt to align with the center R5 of the image 7100. The brain also controls right-eye muscle movement to drive the right eyeball to rotate leftward to attempt to align with the center R6 of the image 7200. This causes the left eye to look rightward and the right eye to look leftward and produces a vertigo feeling because of different light of sights of both eyes. In addition, the vision observed by the user becomes smaller, and after the image 7300 and the image 7400 are fused, the image 7102 of the small tree cannot be seen.

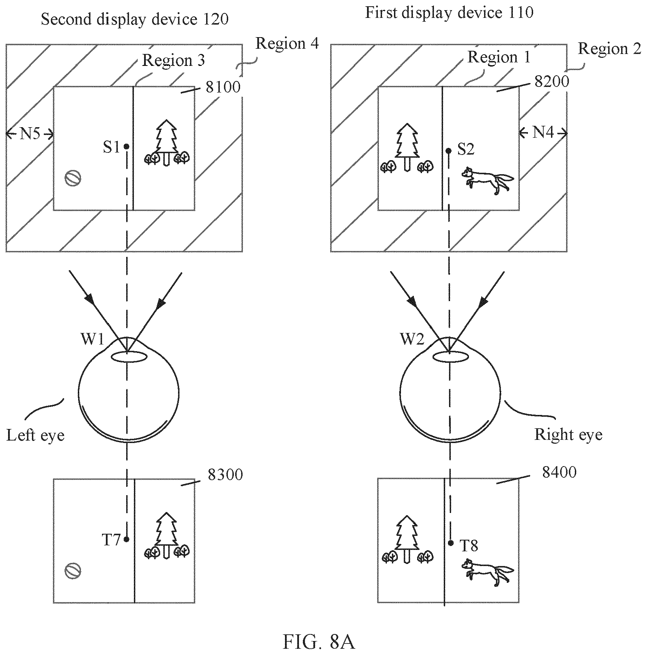

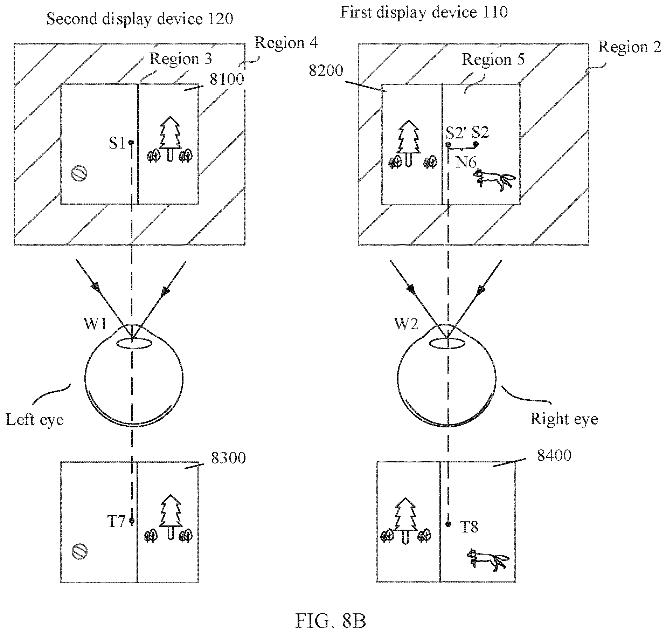

The foregoing lists three cases that cause binocular non-fusion of the user, namely, the case 1 to the case 3. FIG. 8A and FIG. 8B show a possible implementation to solve a problem like binocular non-fusion or poor vision.

As shown in FIG. 8A, a first display component 110 of VR glasses includes two regions: a region 1 and a region 2. The region 1 may be a center region, the region 2 may be an edge region (a shadow region), and the region 2 surrounds the region 1. In other words, a center point of the region 1 may overlap a center point of the first display component 110, and the center point is S2. An area of the region 1 may be preset, and a distance N4 between an inner edge of the region 2 and an outer edge of the region 1 may be preset. A second display component 120 includes two regions: a region 3 and a region 4. The region 3 may be a center region, the region 4 may be an edge region (a shadow region), and the region 4 surrounds the region 3. In other words, a center point of the region 3 may overlap a center point of the second display component 120, and the center point is S1. An area of the region 3 may be preset, and a distance N5 between an inner edge of the region 4 and an outer edge of the region 3 may be preset.

It is assumed that when a user wears the VR glasses, a center W1 of a left eyeball is aligned with the center point S1 of the second display component 120. An image 8100 is displayed in the region 3 on the second display component 120. No content is displayed in the region 4 (for example, the region 4 is in a black screen state). That is, the center W1 of the left eyeball may be aligned with the center point S1 of the image 8100. A left eye captures an image 8300. When the user wears the VR glasses, a center W2 of a right eyeball is aligned with the center point S2 of the first display component 110. An image 8200 is displayed in the region 1 on the first display component 110. No content is displayed in the region 2 (for example, the region 2 is in a black screen state). That is, the point W2 may be aligned with the center point S2 of the image 8200. A right eye captures an image 8400. Because the point W1 is aligned with the point S1, and the point W2 is aligned with the point S2, the image 8300 and the image 8400 can be fused without causing vertigo.

FIG. 8A is a case in which the center W1 of the left eyeball is aligned with the center point S1 of the second display component 120, and the center W2 of the right eyeball is aligned with the center point S2 of the first display component 110. In some embodiments, one of the three cases described above may occur in the VR glasses shown in FIG. 8A, and therefore the center W1 of the left eyeball cannot be aligned with the center point S1 of the second display component 120, and/or the center W2 of the right eyeball cannot be aligned with the center point S2 of the first display component 110. When one of the three cases occurs, the solution in FIG. 8B may be used. For ease of description, the case 1 (where the center W1 of the left eyeball is aligned with the center point S1 of the second display component 120, but the center W2 of the right eyeball cannot be aligned with the center point S2 of the first display component 110) is used as an example for description.

As shown in FIG. 8B, the center W2 of the right eyeball of the user cannot be aligned with the center point S2 of the first display component 110. For example, the center W2 of the right eyeball is aligned with a point S2' on the first display component 110. The point S2' is at a distance N6 to the left of the point S2. In this case, the image 8200 is not displayed in the region 1 on the first display component 110. Instead, the image 8200 is displayed in a region 5 on the first display component 110. A center point of the region 5 is the point S2'. In this way, when the image 8200 is displayed in the region 5, the center point of the image 8200 is the point S2'. Therefore, the point W2 may be aligned with the center point of the image 8200. Therefore, the image 8400 captured by the right eye can be fused with the image 8300 captured by the left eye.

Therefore, a display region is reserved on a display component, so that a problem that the point W1 cannot be aligned with the point S1 and/or the point W2 cannot be aligned with the point S2 can be resolved.

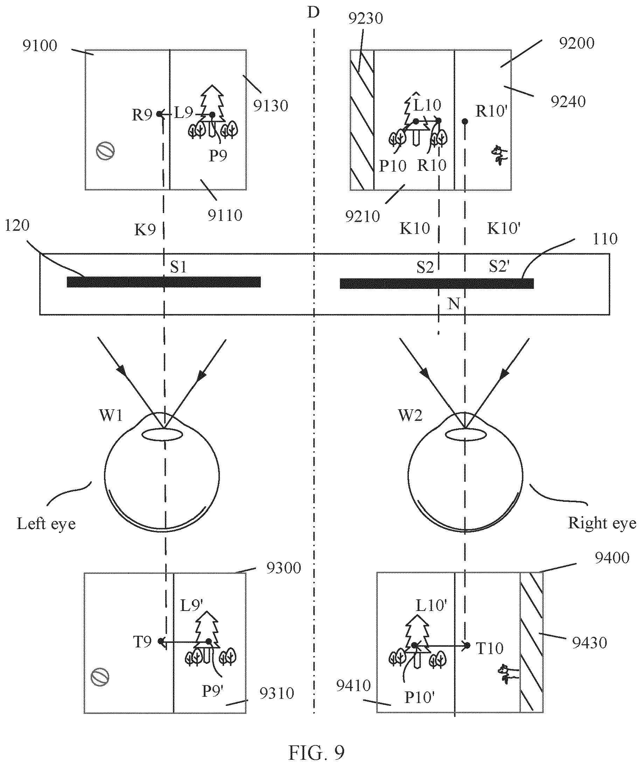

FIG. 9 shows another possible implementation for resolving binocular non-fusion. In this manner, no display region needs to be reserved on a display component, and a problem of binocular non-fusion may be solved in an image processing manner. This is more conducive to reducing a size of the display component and implementing miniaturization and portability of a device.

The case 1 (namely, a case in FIG. 6A) is still used as an example. Refer to FIG. 9. A center point W1 of a left eyeball may be aligned with a center point S1 of a second display component 120, and a center W2 of a right eyeball cannot be aligned with a center point S2 of a first display component 110, but is aligned with a point S2' on the display device (where the point S2' is at a distance N to the right of the point S2). The first display component 110 and the second display component 120 are asymmetrical relative to a middle plane (or a center line of a face).

An example in which the VR glasses in FIG. 9 present an environment 400 to a user is used. The VR glasses generate two images, namely, an image 9100 and an image 9200. The second display component 120 displays the image 9100 in full screen. The first display component 110 displays the image 9200 in full screen. In other words, no display region needs to be reserved on the display component. In this way, a size of the display component may be small, and costs may be reduced. In addition, the small size of the display component is conducive to a design trend of a light and small device. When the second display component 120 displays the image 9100, the center point S1 of the second display component 120 is aligned with a center point R9 of the image 9100, that is, the point S1 and the point R9 are on a same straight line K9. When the first display component 110 displays the image 9200, the center point S2 of the first display component 110 is aligned with a center point R10 of the image 9200, that is, the point S2 and the point R10 are on a same straight line K10.

The image 9100 and the image 9200 include an overlapping region. The overlapping region on the image 9100 is a region 9110. The overlapping region on the image 9200 is a region 9210. A distance from a center point P9 of the overlapping region 9110 to the center point R9 of the image 9100 is L9, and a first direction from the center point P9 of the overlapping region 9110 to the center point R9 of the image 9100 is left. A distance from a center point P10 of the overlapping region 9210 to the center point R10 of the image 9200 is L10, and a first direction from the center point P10 of the overlapping region 9210 to the center point R10 of the image 9200 is right. The distance L9 is not equal to the distance L10. A distance difference between the distance L9 and the distance L10 is N. It should be noted that in FIG. 9, the center point R9 of the image 9100 and the center point R10 of the image 9200 are used as references. In some other embodiments, alternatively, another point (for example, a left vertex) on the image 9110 and another point (for example, a right vertex) on the image 9200 may be used as references. In other words, a distance from the center point P9 of the overlapping region 9110 to the left vertex of the image 9100 is not equal to a distance from the center point P10 of the overlapping region 9210 to the right vertex of the image 9200. The center point P9 and the center point P10 are symmetrical relative to the middle plane (or the center line of the face).

As shown in FIG. 9, when the user wears the VR glasses, the center point W1 of the left eyeball may be aligned with the center S1 of the second display component 120. The left eye captures an image 9300. The image 9300 includes a center point T9. The point T9 is an image point corresponding to the center point R9 on the image 9100. That is, the point R9, the point S1, the point W1, and the point T9 are on the same straight line K9.

As shown in FIG. 9, the center W2 of the right eyeball is aligned with the point S2' on the display component (where the point S2' is at the distance N to the right of the point S2). The point S2' is aligned with a point R10' on the image 9200, and the point R10' is located at the distance N to the right of the center point R10. The right eye captures an image 9400. The image 9400 includes a center point T10. The point T10 is an image point corresponding to the point R10' on the image 9200. That is, the point T10, the point W2, the point S2', and the point R10' are on a same straight line K10'. The straight line K 10' is different from the straight line K10, and a distance between the straight line K10' and the straight line K10 is N.

An overlapping region 9310 on the image 9300 includes a center point P9'. The point P9' is an image point corresponding to the point P9 on the image 9100. A distance from the point P9' to the straight line K9 is L9'. An overlapping region 9410 on the image 9400 includes a center point P10', and the point P10' is an image point corresponding to the point P10 on the image 9200. A distance from the point P10' to the straight line K10' is L10'. The distance L9' is equal to the distance L10'. In addition, a direction from the point P9' to the straight line K9 is opposite to a direction from the point P10' to the straight line K10', and the center point P9' and the center point P10' are symmetrical relative to the middle plane (or the center line of the face).

Although the first display component 110 deviates leftward by a distance N compared with a corresponding optical device 130 in FIG. 9, an offset of the first display component 110 is compensated (or may be referred to as canceled) because the overlapping region 9210 moves rightward by the distance N. Therefore, the overlapping region 9410 on the image captured by the right eye and the overlapping region 9310 on the image captured by the left eye may be fused.

After the overlapping region 9210 moves rightward by the distance N, a region 9230 is reserved on a leftmost side of the first display component 110, and a width of the region 9230 is N. In some embodiments, the region 9230 displays a part of an image on the left side of the overlapping region 9110. For example, on the image 9100, if a background object (for example, the background is a blue sky and a white cloud) is displayed near a region whose width is N on the left side of the overlapping region 9110, the region 9230 also displays the background object (for example, the background is the blue sky and the white cloud). Therefore, objects of the region 9230 and the part of the region on the left side of the overlapping region 9110 are the same, and the two regions may also be understood as overlapping regions. In some embodiments, the region 9230 includes a new object and the object is not on the image 9100. For example, if the first display component 110 deviates upward by the distance N relative to the corresponding optical device 130, the overlapping region 9210 moves downward by the distance N, and the region 9230 may appear in an upper part of the first display component 110. Because the image 9200 is an image block on a panoramic image, an object in the region 9230 may be an object (an object that is not on the image 9100) in the panoramic image block and that is located in a region above the overlapping region 9210. In some embodiments, the region 9230 may display a first color, and a type of the first color is not limited, for example, black or white. It may be understood that, as the first display component 110 deviates leftward by the distance N relative to the corresponding optical device (130), the region 9230 may be out of a line-of-sight range of the right eye. Therefore, the region 9230 may alternatively not display any content. For example, the region 9230 may not be powered on. In other words, a black screen occurs in the region 9230, and this can reduce power consumption. It should be noted that, when the region 9230 is out of the line-of-sight range of the right eye, because a size of a field of view of the right eye remains unchanged, the image 9400 captured by the right eye includes a right region 9430 (a shadow region), and the region 9430 is not an image of the image 9200. For example, the region 9430 is a black region, indicating that this part does not have an image of any object for display.

It should be noted that, in FIG. 9, the case 1 is used as an example for description, and the case 3 (that is, FIG. 7A) is used as an example for description in the following.

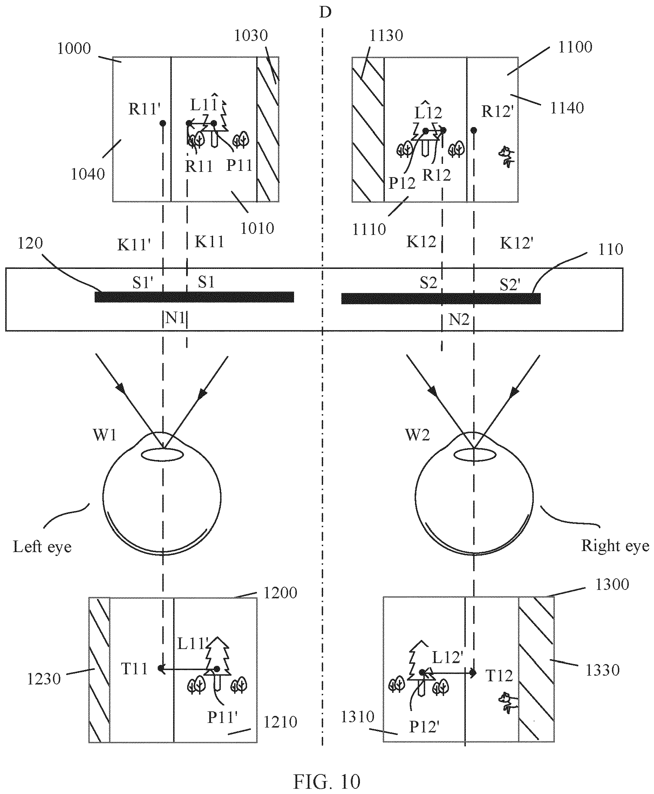

As shown in FIG. 10, an example in which the second display component 120 deviates rightward by a distance N1 relative to a corresponding optical device 140, and the first display component 110 deviates leftward by a distance N2 relative to a corresponding optical device 130, where N1 is less than N2. Therefore, when the user wears the VR glasses, the center point W1 of the left eyeball cannot be aligned with the center S1 of the second display component 120, but is aligned with the point S1' on the second display component 120, where the point S1' is located at the distance N1 to the left of the point S1. The center W2 of the right eyeball cannot be aligned with the center point S2 of the first display component 110, but is aligned with a point S2' on the display component, where the point S2' is located at the distance N2 to the right of the point S2. The first display component 110 and the second display component 120 are asymmetrical relative to a middle plane (or a center line of a face).

An example in which the VR glasses in FIG. 10 present an environment 400 to a user is used. The VR glasses generate two images, namely, an image 1000 and an image 1100. The second display component 120 displays the image 1000 in full screen. The first display component 110 displays the image 1100 in full screen. That is, no display region needs to be reserved on the display component. In this way, a size of the display component may be small, and costs may be reduced. In addition, this is conducive to a design trend of a light and small device. When the second display component 120 displays the image 1000, the center point S1 of the second display component 120 is aligned with a center point R11 of the image 1000, that is, the point S1 and the point R11 are on a same straight line K11. When the first display component 110 displays the image 1100, the center point S2 of the first display component 110 is aligned with a center point R12 of the image 1100, that is, the point S2 and the point R12 are on a same straight line K12.

The image 1000 and the image 1100 include an overlapping region. An overlapping region on the image 1000 is a region 1010. In some embodiments, a region 1030 may alternatively be the overlapping region, and the region 1030 overlaps a part of an image on a right side of a region 1110. In some embodiments, to save power, the region 1030 may alternatively not display any content. In FIG. 10, an example in which the region 1030 may alternatively not display any content is used for description. An overlapping region on the image 1100 is a region 1110. In some embodiments, a region 1130 may alternatively be the overlapping region, and the region 1130 overlaps a part of an image on a left side of the region 1010. In some embodiments, to save power, the region 1130 may alternatively not display any content. In FIG. 10, an example in which the region 1130 may alternatively not display any content is used for description.

The following uses an example in which the overlapping regions are the region 1010 and the region 1110 for description. A distance from a center point P11 of the overlapping region 1010 to the center point R11 of the image 1000 is L11, and a first direction from the center point P11 of the overlapping region 1010 to the center point R11 of the image 1000 is left. A distance from a center point P12 of the overlapping region 1110 to the center point R12 of the image 1100 is L12, and a second direction from the center point P12 of the overlapping region 1110 to the image 1100 is right. Because N1 is not equal to N2, the distance L11 is not equal to the distance L12. For example, N1 is less than N2, and the distance L11 is greater than the distance L12. A distance difference between the distance L11 and the distance L12 is equal to a distance difference between N1 and N2. In some other embodiments, a direction from the point P11 to the point R11 is different from a direction from the point P12 to the point R12, for example, the direction is opposite. The center point P11 and the center point P12 are symmetrical relative to a middle plane (or a center line of a face).

As shown in FIG. 10, when the user wears the VR glasses, the center point W1 of the left eyeball is aligned with the point S1' of the second display component 120. The point S1' is aligned with a point R11' on the image 1000, and the point R11' is located at a distance N1 to the left of a center point R11. A left eye captures an image 1200. The image 1200 includes a center point T11. The point T11 is an image point corresponding to the point R11' on the image 1000. That is, the point T11, the point W1, the point S1', and the point R11' are on a same straight line K 11'. The straight line K 11' is different from the straight line K11, and a distance between the straight line K11' and the straight line K11 is N1.

As shown in FIG. 10, the center W2 of the right eyeball is aligned with the point S2' on the first display component 110. The point S2' is aligned with a point R12' on the image 1100, and the point R12' is located at a distance N2 to the right of the center point R12. A right eye captures an image 1300. The image 1300 includes a center point T12. The point T12 is an image point corresponding to the point R12' on the image 1100. That is, the point T12, the point W2, the point S2', and the point R12' are on a same straight line K12'. The straight line K12' is different from the straight line K12, and a distance between the straight line K12' and the straight line K12 is N2.

An overlapping region 1210 on the image 1200 captured by the left eye includes a center point P11'. The point P11' is an image point corresponding to the point P11 on the image 1000. A distance from the point P11' to the straight line K11' is L11'. An overlapping region 1310 on the image 1300 captured by the right eye includes a center point P12', and the point P12' is an image point corresponding to the point P12 on the image 1100. A distance from the point P12' to the straight line K12' is L12'. The distance L11' is equal to the distance L12'. In addition, a direction from the point P11' to the straight line K11' is opposite to a direction from the point P12' to the straight line K12', and the center point P11' and the center point P12' are symmetrical relative to the middle plane (or the center line of the face).

In other words, although the second display component 120 deviates rightward by a distance N1 relative to the corresponding optical device 140 in FIG. 10, the overlapping region 1010 moves leftward by the distance N1. This compensates for (or cancels) the offset of the first display component 110. Similarly, the first display component 110 deviates leftward by a distance N2 relative to the corresponding optical device 130, but the offset of the first display component 110 is compensated (or canceled) because the overlapping region 1110 moves rightward by the distance N2. Therefore, the overlapping region 1210 and the overlapping region 1310 can be fused.

Still refer to FIG. 10. A non-overlapping region on the image 1000 includes two regions, namely, a region 1030 and a region 1040. The overlapping region 1010 is located between the region 1030 and the region 1040. The region 1030 may display a second color. A type of the second color is not limited, for example, black or white, or may be a background color of the image 1000. A non-overlapping region on the image 1100 includes two regions, namely, a region 1130 and a region 1140. The overlapping region 1110 is located between the region 1130 and the region 1140. The region 1130 may display a first color. A type of the first color is not limited, for example, black or white, or may be a background color of the image 1100. The first color and the second color may be the same or may be different.

It should be noted that because N1 is not equal to N2, an area (or a width) of the non-overlapping region 1030 on the image 1000 is different from an area (or a width) of the non-overlapping region 1130 on the image 1100. For example, if N1 is less than N2, the width of the region 1030 is less than the width of the region 1130. Similarly, an area (or a width) of the non-overlapping region 1040 on the image 1000 is different from an area (or a width) of the non-overlapping region 1140 on the image 1100. For example, if N1 is less than N2, the width of the region 1140 is less than the width of the region 1040.

In some embodiments, the image 1000 and the image 1100 are respectively image blocks in different regions on a same panorama image. For example, the image 1000 is an image block in a first display region on the panoramic image. The image 1100 is an image block in a second display region on the panoramic image. The overlapping region is an overlapping region between the first display region and the second display region. The region 1030 may be a region on a right side of the region 1010 on the panoramic image. The region 1130 may be a region on a left side of the region 1110 on the panoramic image.

It may be understood that, as the first display component 110 moves leftward by a distance N2, the region 1130 is out of a line-of-sight range of a right eye. Therefore, the region 1130 may alternatively not display any content, for example, not display any color. It should be noted that, when the region 1130 is out of the line-of-sight range of the right eye, because a size of a field of view of the right eye remains unchanged, the image 1300 captured by the right eye includes a right region 1330 (a shadow region), and the region 1330 is not an image of the image 1100, for example, a black region. It represents that this part does not have an image of any object for display. Similarly, as the second display component 120 deviates rightward by the distance N1 relative to the corresponding optical device 140, the region 1030 is out of a line-of-sight range of a left eye. Therefore, the region 1030 may alternatively not display any content, for example, not display any color. It should be noted that, when the region 1030 is out of the line-of-sight range of the left eye, because a size of a field of view of the left eye remains unchanged, the image 1200 captured by the left eye includes a left region 1230 (a shadow region), and the region 1230 is not an image of the image 1000, for example, a black region. It represents that this part does not have an image of any object for display.

It may be understood that positions of the first display component 110 and/or the second display component 120 may change dynamically. FIG. 10 is used as an example. In some embodiments, a position of the center point P11 of the overlapping region 1010 may move with a position of the second display component 120, where a position movement direction of the center point P11 is opposite to a movement direction of the second display component 120, to compensate or cancel the position movement of the second display component 120. Similarly, a position of the center point P12 of the overlapping region 1110 may move with a position of the first display component 110, where a position movement direction of the center point P12 is opposite to a position movement direction of the first display component 110, to compensate or cancel the position movement of the first display component 110.

As mentioned above, VR glasses with assembly tolerance still have assembly tolerance when IPD adjustment is performed. FIG. 10 is used as an example. It is assumed that IPD adjustment is performed on the VR glasses (for example, the first display component 110 and the second display component 120 move by a same distance and move in the opposite direction, for example, the first display component 110 and the 120 move leftward and rightward respectively, or the first display component 110 and the second display component 120 move rightward and leftward respectively). Before and after the IPD adjustment, a relative position relationship between assembly tolerance of the first display component 110 and the second display component 120 remains unchanged (that is, a difference between the offsets remains unchanged). Therefore, a position movement relationship of the two images respectively displayed by the first display component 110 and the second display component 120 remains unchanged, to ensure that binocular fusion is implemented both before and after the IPD adjustment. For example, if the VR glasses perform IPD adjustment before displaying a first image and a second image, the distance difference between the distance L11 and the distance L12 remains unchanged compared with that before the IPD adjustment is performed, and a relative relationship between the first direction and the second direction remains unchanged compared with that before the IPD adjustment. In some embodiments, when the first display component 110 and the second display component 120 move leftward and rightward respectively, or the first display component 110 and the second display component 120 move rightward and leftward respectively, both the first direction and the second direction remain unchanged compared with that before the IPD adjustment.

In some embodiments, the VR glasses perform IPD adjustment before displaying the first image and the second image. Before the IPD adjustment, when the first display component 110 and the second display component 120 respectively display images, a distance from a center point of an overlapping region on an image displayed by the second display component 120 to a center point of an image displayed by the second display component 120 is a third distance, and a distance from a center point of an overlapping region on an image displayed by the first display component 110 to a center point of an image displayed by the first display component 110 is a fourth distance, and a difference between the third distance and the fourth distance is a first distance difference. After IPD adjustment is performed, the first display component 110 and the second display component 120 respectively display the first image and the second image, and a distance from a center point of an overlapping region on the first image to a center point of the first image is a distance L11. A distance from a center point of an overlapping region on the second image to a center point of the second image is a distance L12, and a difference between the distance L11 and the distance L12 is a second distance difference. The first distance difference is equal to the second distance difference.

In some embodiments, the VR glasses perform IPD adjustment after displaying the first image and the second image. Before the IPD adjustment, the first display component 110 and the second display component 120 respectively display the first image and the second image. A distance from a center point of an overlapping region on the first image to a center point of the first image is a distance L11, a distance from a center point of an overlapping region on the second image to a center point of the second image is a distance L12, and a difference between the distance L11 and the distance L12 is a second distance difference. After the IPD adjustment, when the first display component 110 and the second display component 120 respectively display images, a distance from a center point of an overlapping region on an image displayed by the second display component 120 to a center point of an image displayed by the second display component 120 is a fifth distance. A distance from a center point of an overlapping region on an image displayed by the first display component 110 to a center point of an image displayed by the first display component 110 is a sixth distance, and a difference between the fifth distance and the sixth distance is a third distance difference. The third distance difference is equal to the second distance difference.

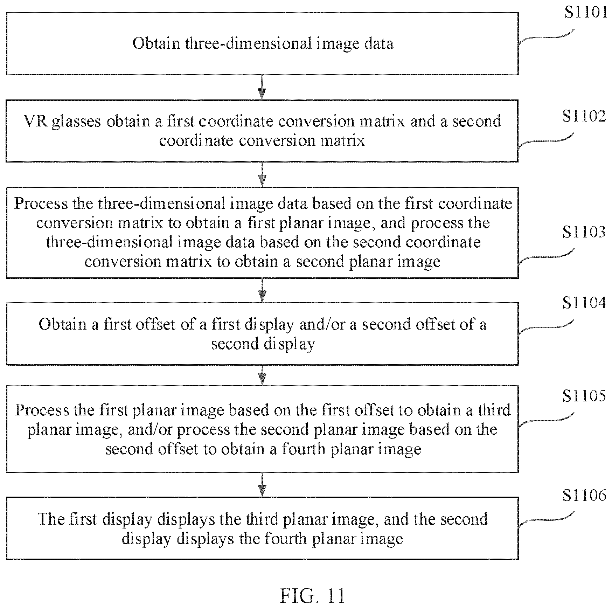

For example, FIG. 11 is a schematic flowchart of a display method according to an embodiment of this specification. The method may be applied to any one of the foregoing display methods, for example, may be applied to the display method shown in FIG. 9 or FIG. 10. As shown in FIG. 11, the procedure includes the following steps.

S1101: VR glasses obtain three-dimensional image data.

The three-dimensional image data includes two-dimensional image information and depth information. The depth information includes a depth corresponding to each pixel in the two-dimensional image information. The three-dimensional image data may be generated by a VR application like a VR game application, a VR teaching application, a VR movie viewing application, a VR driving application, and the like.

S1102: The VR glasses obtain a first coordinate conversion matrix and a second coordinate conversion matrix. The first coordinate conversion matrix is used to convert the three-dimensional image data into a first planar image, and the second coordinate conversion matrix is used to convert the three-dimensional image data into a second planar image. The first planar image corresponds to a first display component, and the second planar image corresponds to a second display component.

The first display component may be the foregoing second display component 120, corresponding to a left eye, and the second display component may be the foregoing first display component 110, corresponding to a right eye.

The first coordinate conversion matrix is used to convert the three-dimensional image data from a first coordinate system to a second coordinate system, where the first coordinate system is a coordinate system in which the three-dimensional image data is located, and the second coordinate system is a coordinate system corresponding to the first display component or a left eye. The coordinate system corresponding to the left eye may be a coordinate system of a first virtual camera. The first virtual camera may be understood as a virtual camera created by simulating the left eye. Because an image capture principle of a human eye is similar to an image shooting principle of a camera, the virtual camera may be created to simulate an image capture process of the human eye. The first virtual camera simulates a person's left eye. For example, a position of the first virtual camera is the same as a position of the left eye, and/or a field of view of the first virtual camera is the same as a field of view of the left eye. For example, generally, if a field of view of the human eye is 110 degrees up and down, and 110 degrees left and right, the field of view of the first virtual camera is 110 degrees up and down, and 110 degrees left and right. For another example, the VR glasses may determine the position of the left eye, and the first virtual camera is disposed at the position of the left eye. There are a plurality of manners of determining the position of the left eye. For example, in a manner 1, a position of the first display component is first determined, and then the position of the left eye may be estimated by adding a spacing A to the position of the first display component. This manner determines the position of the left eye more accurately. The spacing A is a spacing between a display component and a human eye, and may be stored in advance. Manner 2: The position of the left eye is equal to a position of the first display component. This manner ignores a spacing between a human eye and a display component, and is less difficult to implement.

The second coordinate conversion matrix is used to convert the three-dimensional image data from a first coordinate system to a third coordinate system, where the first coordinate system is a coordinate system in which the three-dimensional image data is located, and the third coordinate system is a coordinate system corresponding to the second display component or a right eye. The coordinate system corresponding to the right eye may be a coordinate system of a second virtual camera. The second virtual camera may be understood as a camera created to simulate a right eye of a user. For example, a position of the second virtual camera is the same as a position of the right eye, and/or a field of view of the second virtual camera is the same as a field of view of the right eye.

For example, the first coordinate conversion matrix and the second coordinate conversion matrix may be stored in the VR glasses in advance. For example, the first coordinate conversion matrix and the second coordinate conversion matrix are stored in a register, and the VR glasses read the first coordinate conversion matrix and the second coordinate conversion matrix from the register.

S1103: The VR glasses process the three-dimensional image data based on the first coordinate conversion matrix to obtain the first planar image, and process the three-dimensional image data based on the second coordinate conversion matrix to obtain the second planar image.

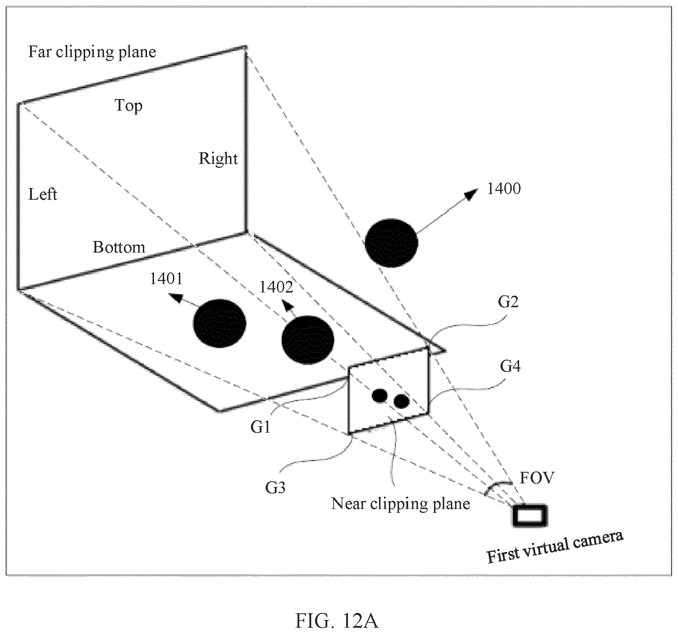

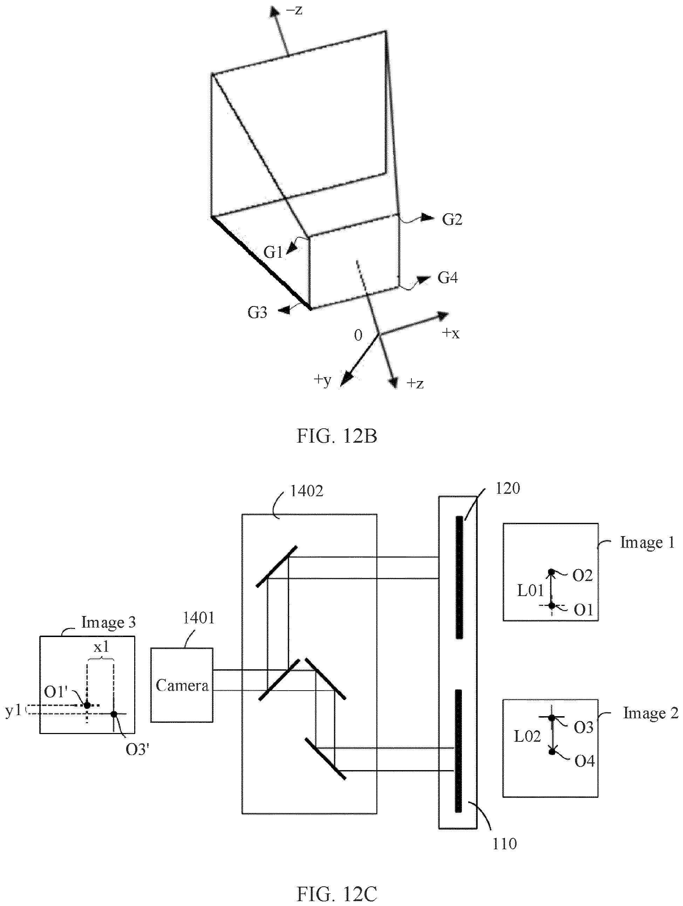

As described above, both the first planar image and the second planar image are obtained through coordinate conversion from the three-dimensional image data. The coordinate conversion process may be understood as that a virtual camera is used to shoot a three-dimensional image, to complete conversion from the three-dimensional image to a two-dimensional image. For example, the first planar image is obtained by shooting the three-dimensional image data by using the first virtual camera, and the second planar image is obtained by shooting the three-dimensional image data by using the second virtual camera. The first virtual camera is used as an example. FIG. 12A is a schematic diagram of a first virtual camera. The first virtual camera includes four parameters, for example, a field of view (Field Of View, FOV), an aspect ratio of an actual shooting window, a near clipping plane, and a far clipping plane. The aspect ratio of the actual shooting window may be an aspect ratio of the far clipping plane. The far clipping plane may be understood as a farthest range that can be shot by the first virtual camera, and the near clipping plane may be understood as a nearest range that can be shot by the first virtual camera. It may be understood that, in the three-dimensional image data, an object that is in the FOV and that is between the near clipping plane and the far clipping plane may be shot by the first virtual camera. For example, the three-dimensional image data includes a plurality of objects, such as a sphere 1400, a sphere 1401, and a sphere 1402. The sphere 1400 is outside the FOV and cannot be shot, and the sphere 1401 and the sphere 1402 are within the FOV and between the near clipping plane and the far clipping plane and can be shot. Therefore, an image shot by the first virtual camera includes the sphere 1401 and the sphere 1402. The image shot by the first camera may be understood as a projection image of the three-dimensional image data on the near clipping plane. Coordinates of each pixel on the projection image may be determined. For example, refer to FIG. 12B. A three-dimensional coordinate system O-XYZ is established based on a center of the first virtual camera. An X-Y plane includes four quadrants, namely, four regions, which are respectively a top left region, a top right region, a bottom left region, and a bottom right region. An edge point G1, an edge point G2, an edge point G3, and an edge point G4 of an object on the projection image of the near clipping plane in the three-dimensional image data are used as an example. Coordinates corresponding to the edge point G1 to the edge point G4 are (l, r, t, b), where l is left (left), t is top (top), r is right (right), and b is bottom (bottom). For example, coordinates of the edge point G1 are (3, 0, 3, 0), coordinates corresponding to the edge point G2 are (0, 3, 3, 0), and coordinates corresponding to the edge point G3 are (3, 0, 0, 3), and coordinates corresponding to the edge point G4 are (0, 3, 0, 3). Depths of the four edge points are all n.

Therefore, using the first planar image as an example, the first planar image meets the formula: A * H = K, where A is a matrix corresponding to the three-dimensional image data, H is the first coordinate conversion matrix, and K is a matrix corresponding to the first planar image. For example, A is (l, r, t, b), and the first coordinate conversion matrix H meets the following:

$$\begin{pmatrix} \frac{2n}{r-l} & 0 & \frac{r+l}{r-l} & 0 \\ 0 & \frac{2n}{t-b} & \frac{t+b}{t-b} & 0 \\ 0 & 0 & \frac{-(f+n)}{f-n} & \frac{-2fn}{f-n} \\ 0 & 0 & -1 & 0 \end{pmatrix}$$

Herein, l represents left (left), r represents right (right), t represents a height or top (top), b represents a bottom or bottom (bottom), and n is a depth of the near clipping plane in a z-axis direction. f is a depth of the far clipping plane in the z-axis direction. For a pixel point in the three-dimensional image data, offset may be performed by using the foregoing first coordinate conversion matrix H in four directions: upward, downward, leftward, and rightward, to obtain a position in the first planar image. Because A is one row and four columns, and H is four rows and four columns, obtained K is one row and four columns, that is, a position of a pixel point on the first planar image is described by using parameters in four directions: upward, downward, leftward, and rightward.

A principle of obtaining the second planar image is the same as a principle of obtaining the first planar image. Details are not described again.

S1104: The VR glasses obtain a first offset of the first display component and/or a second offset of the second display component.

For example, the first offset and the second offset may be the same or may be different. For example, FIG. 10 is used as an example. The first offset of the first display component 110 is a left offset distance N2 of the first display component 110 relative to a corresponding optical device 130. The second offset of the second display component 120 is a right offset distance N1 of the second display component 120 relative to a corresponding optical device 140. In some embodiments, if both distances and directions of the first offset and the second offset are equal, for example, the first offset of the first display component 110 is a left offset distance N3 of the first display component 110 relative to a corresponding optical device 130, and if the second offset of the second display component 120 is a left offset distance N3 of the second display component 120 relative to a corresponding optical device 140, coordinate conversion does not need to be performed on the first image and the second image, and the first image and the second image can be fused by the both eyes of the user. In this case, coordinate conversion may not be performed on the first image and the second image. In this case, optionally, coordinates of the first image and coordinates of the second image may be moved rightward by a distance N3, so that centers of the images may appear in front of the human eye, to avoid squint.

In some implementations, the VR glasses store the first offset and the second offset in advance. For example, the first offset and the second offset are stored in a register. The VR glasses read the first offset and the second offset from the register. For example, the first offset and the second offset may be calibrated and stored in the VR glasses before the VR glasses are delivered.

An implementable calibration manner is: After the VR glasses are assembled, a binocular fusion detection apparatus is used to calibrate a position offset of a display component on the VR glasses. For example, as shown in FIG. 12C, the binocular fusion detection apparatus includes a camera 1401 and an optical system 1402. Images displayed by two display components of the VR glasses are captured by the camera 1401 after a series of reflections by the optical system 1402. For example, the second display component 120 of the VR glasses displays an image 1, and the first display component 110 displays an image 2. Both the image 1 and the image 2 have crosses (a cross on the image 1 is in a dashed line, and a cross on the image 2 is in a solid line), and a distance L01 from an intersection point O1 of the cross on the image 1 to a center point O2 of the image 1 is equal to a distance L02 from an intersection point O3 of the cross on the image 2 to a center point O4 of the image 2. A direction from the intersection point O1 to the center point O2 is opposite to a direction from the intersection point O3 to the center point O4. After reflection by the optical system 1402, the camera 1401 captures an image 3. The image 3 includes two crosses. An intersection point of one cross is O1', and is an image point corresponding to the intersection point O1 on the image 1, and an intersection point of the other cross is O3', and is an image point corresponding to the intersection point O3 on the image 2. It should be noted that if assembly displacement deviation does not occur, because the crosses on the image 1 and the image 2 is left-right symmetrical (that is, the distance L01 is equal to the distance L02, and the direction from the intersection point O1 to the center point O2 is opposite to the direction from the intersection point O3 to the center point O4), so that there should be a cross on the image 3 (the cross on the image 1 and the cross on the image 2 are fused). However, because the two display components have a position offset (for example, there is an assembly tolerance), the cross on the image 1 and the cross on the image 2 cannot be fused, two crosses appear on the image 3. For example, spacing between two crosses on the image 3 includes: spacing in an X direction is x1, and spacing in a Y axis is y1. The spacing between the two crosses may be used to determine the first offset of the first display component and the second offset of the second display component.

In some embodiments, the first offset of the first display component is (x1/2, y1/2), and the second offset of the second display component is (-x1/2, -y1/2). Alternatively, the first offset of the first display component is (x1, y1), and the second offset of the second display component is 0. Alternatively, the first offset of the first display component is (x1/3, y1/3), and the second offset of the second display component is (-2x1/3, -2y1/3). In conclusion, a total displacement offset of the first display component and the second display component in the X-axis direction is x1, and a total displacement offset of the first display component and the second display component in the Y-axis direction is y1. It should be noted that, for example, the first offset of the first display component is (x1/2, y1/2), and the second offset of the second display component is (-x1/2, -y1/2), to represent the first display component deviates in an X-axis positive direction and a Y-axis positive direction because the first offset is a positive number; and to represent the second display component deviates in an X-axis opposite direction and a Y-axis opposite direction because the second offset is a negative number.

In some embodiments, an offset of an object on an image is proportional to a position offset of a display component. To avoid that the offset of the object on the image is too large, the offset of the display component should not be too large, or an offset difference between the two display devices should not be too large. For example, the first offset of the first display component is (x1, y1), and the second offset of the second display component is 0. As a result, the offset of the object on the image on the first display component is excessively large, or an object offset difference in an image displayed on the two display components is excessively large. Therefore, the offsets corresponding to the two display components may be compensated for the total translation through allocation. For example, the first offset of the first display component is (x1/2, y1/2), and the second offset of the second display component is (-x1/2, -y1/2), to ensure that the offset of the object on the image is not too large or a difference between object offsets on images displayed by the two display component is not too large.

S1105: The VR glasses perform processing on the first planar image based on the first offset to obtain a third planar image, and/or perform processing on the second planar image based on the second translation to obtain a fourth planar image.

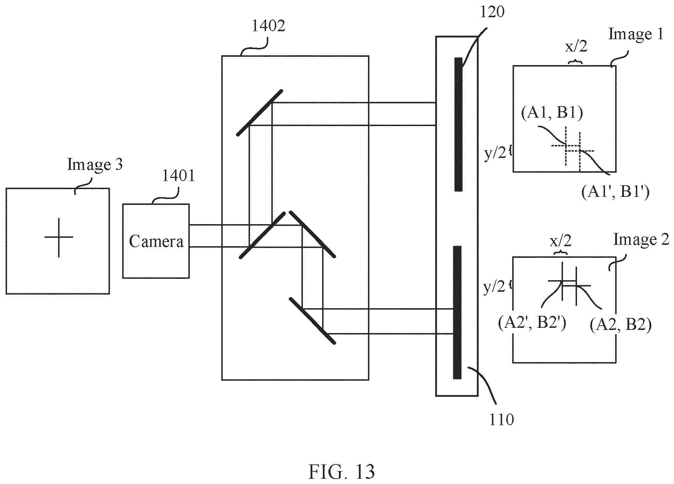

Continue using FIG. 12C as an example. The first planar image is the image 1, and the second planar image is the image 2. It is assumed that a first offset of the second display component 120 is (x1/2, y1/2), and a second offset of the first display component 110 is (-x1/2, -y1/2). Then, as shown in FIG. 13, a position (A1, B1) of the cross on the image 1 deviates to (A1', B1') based on (x1/2, y1/2), to compensate for an assembly position offset, where A1' = A1 + x1/2, B1' = B1 + y1/2. Similarly, a position (A2, B2) of the cross on the image 2 deviates to (A2', B2') based on (-x1/2, -y1/2), to compensate for an assembly position offset, where A2' = A2 - x1/2, B2' = B2 - y1/2. When the second display component 120 displays a processed image 1, and the first display component 110 displays a processed image 2, the image 3 captured by the camera includes one cross, that is, cross lines on the two images 1 are fused.

The processing on the first planar image based on the first offset to obtain the third planar image may include at least one of a manner 1 or a manner 2.

Manner 1: Translate each pixel point on the first planar image by using the first offset, to obtain the third planar image. In other words, the first planar image moves as a whole (including an overlapping region and a non-overlapping region).

Manner 2: Translate a pixel point in an overlapping region of the first planar image by using the first offset, to obtain the third planar image. The overlapping region is an overlapping region on the first planar image and the second planar image, and the overlapping region includes at least one same object. In the manner 2, considering that pixel points in the non-overlapping region do not need to be fused, only pixel points in the overlapping region are translated to ensure binocular fusion. This manner can reduce workload and improve efficiency.

For example, that the first offset is (x1/2, y1/2) is used as an example, a first point in the overlapping region on the first planar image is at (X1, Y1), and a corresponding position of the first point on the third planar image is (X2, Y2), where X2 = X1 + x1/2, Y2 = Y1 + y1/2. The first point may be any point in the overlapping region, for example, a center point or an edge point.

The processing on the second planar image based on the second translation to obtain a fourth planar image may include at least one of a manner 1 or a manner 2. Manner 1: Translate each pixel point on the second planar image by using the second offset, to obtain the fourth planar image. In other words, the second planar image moves as a whole. Manner 2: Translate a pixel point in an overlapping region of the second planar image by using the second offset, to obtain the fourth planar image. The overlapping region is an overlapping region on the first planar image and the second planar image, and the overlapping region includes at least one same object. For example, that the second offset is (-x1/2, -y1/2) is used as an example, a second point in the overlapping region on the second planar image is at (X3, Y3), and a corresponding position of the second point on the fourth planar image is (X4, Y4), where X4 = X3 - x1/2, Y4 = Y3 - y1/2. The second point may be any point in the overlapping region, for example, a center point or an edge point.

In some embodiments, the overlapping region may include a plurality of objects, such as a first object and a second object. Offsets of the first object and the second object may be different.

For example, a first feature point of the first object and a second feature point of the second object are used as an example for description. On the first planar image, coordinates of the first feature point of the first object are (X5, Y5), and coordinates of the second feature point of the second object are (X6, Y6). The first feature point of the first object may be a center point of the first object, a vertex of the first object, or the like. The second feature point of the second object may be a center point of the second object, a vertex of the second object, or the like. For example, a first offset of the first feature point is (x1/2, y1/2), and a first offset of the second feature point is (x1/3, y1/3). In other words, the first offset of the first feature point is greater than the second feature point. In this way, the third planar image is obtained after the first planar image is processed, and the third planar image is used for display on the second display component 120. In some embodiments, coordinates of the first feature point of the first object on the third planar image are (X7, Y7), where X7 = X5 + x1/2, and Y7 = Y5 + y1/2. In some embodiments, coordinates of the second feature point of the second object on the third planar image are (X8, Y8), where X8 = X6 + x1/3, and Y8 = Y6 + y1/3. The coordinates (X5, Y5), the coordinates (X6, Y6), the coordinates (X7, Y7), and the coordinates (X8, Y8) are coordinates in a same coordinate system, and all are coordinates on the second display component 120.

For another example, on the second planar image, coordinates of the first feature point of the first object are (X9, Y9), and coordinates of the second feature point of the second object are (X10, Y10). The second offset of the first feature point is (x1/4, y1/4), and the second offset of the second feature point is (x1/5, y1/5). In other words, the second offset of the first feature point is greater than the second object. In this way, the fourth planar image is obtained after the second planar image is processed, and the fourth planar image is used for display on the first display component 110. In some embodiments, coordinates of the first feature point of the first object on the fourth planar image are (X11, Y11), where X11 = X9 + x1/4, and Y11 = Y9 + y1/4. In some embodiments, coordinates of the second feature point of the second object on the fourth planar image are (X12, Y12), where X12 = X10 + x1/5, and Y12 = Y10 + y1/5. The coordinates (X9, Y9), the coordinates (X10, Y10), the coordinates (X11, Y11), and the coordinates (X12, Y12) are coordinates in a same coordinate system, and all are coordinates on the first display component 110.

It is assumed that coordinates of the first feature point of the first object on the third planar image are (X7, Y7), and coordinates of the first feature point of the first object on the fourth planar image are (X11, Y11), a coordinate difference between the coordinates (X7, Y7) and the coordinates (X11, Y11) is (D1, D2), where D1 = X7 - X11, and D2 = Y7 - Y11. It is assumed that coordinates of the second feature point of the second object on the third planar image are (X8, Y8), and coordinates of the second feature point of the second object on the fourth planar image are (X12, Y12), a coordinate difference between the coordinates (X8, Y8) and the coordinates (X12, Y12) is (D3, D4), where D3 = X8 - X12, and D4 = Y8 - Y12. The coordinate difference (D1, D2) is different from the coordinate difference (D3, D4), for example, D1>D3 and/or D2>D4. Because an offset of the first object is greater than an offset of the second object, where the offset of the second object may be 0. That is, the second object may not deviate.

In the foregoing example, that the offset of the first object is greater than that of the second object is used as an example. In some embodiments, when at least one of the following conditions is met, the offset of the first object is greater than the offset of the second object, or only the first object is offset, and the condition includes the following.

Condition 1: The first object is located in a region in which a point of gaze of a user is located, and the second object is not located in the region in which the point of gaze of the user is located. For example, the point of gaze of the user may be obtained based on information obtained by an eye tracking module 105. The region in which the point of gaze is located may be a circular region or a square region centered on the point of gaze, or the like. Generally, the user pays high attention to an object in the region in which the point of gaze is located, and pays low attention to an object in a region in which the point of gaze is not located. Therefore, an offset of the object in which the point of gaze of the user is not located is small or even does not deviate, and this affects user experience slightly, and can save calculation workload. When the point of gaze of the user changes, offsets of different objects may change accordingly, to match the change of the point of gaze and achieve a better visual effect.

Condition 2: The first object and the second object are both located in a region in which a point of gaze of a user is located, and the second object is closer to an edge of the region in which the point of gaze of the user is located than the first object. Generally, the user pays high attention to an object at a middle position in the region in which the point of gaze is located, and pays low attention to an object at an edge position. Therefore, an offset of the object at the edge position is small, and this affects user experience slightly, and can save workload.

Condition 3: A distance between the first object and a center of the first image is greater than a distance between the second object and a center of the second image, and in a fused image, the first object is closer to the center than the second object. Generally, the user pays high attention to an object at a middle position on an image, and pays low attention to an object at an edge position. Therefore, an offset of the object at the edge position on the image is small, and this can save workload and affect user experience slightly. For example, when an electronic device plays a movie, the user pays more attention to content in a center of a screen, and the second object located at the edge position on the image may deviate slightly or even not deviate.

Condition 4: A quantity of times of user interaction corresponding to the first object is greater than a quantity of times of user interaction corresponding to the second object. Generally, an object with a large quantity of times of interaction is an object that the user is interested in, and an object with a small quantity of times of interaction is not an object that the user is interested in. Therefore, an offset of the object with the small quantity of times of interaction is small, and this can save workload, and affect user experience slightly. For example, an electronic device may record a quantity of times of interaction between the user and each object. If a quantity of times of interaction between the user and the first object is greater than a first threshold, the first object may always be offset. If a quantity of times of interaction between the user and the second object is less than a second threshold, offset or more offsets are performed on the second object only when the second object is located in a region in which a point of gaze is located.

Condition 5: The first object is a user-specified object, and the second object is not a user-specified object. For example, when the user pays more attention to the first object, the user may choose to deviate only the first object according to a requirement of the user, or the offset of the first object is large.

S1106: The first display component displays the third planar image, and the second display component displays the fourth planar image.

The third planar image and the fourth planar image are processed images. When the first display component displays the third planar image and the second display component displays the fourth planar image, the user can see a virtual environment clearly and comfortably and a case that binocular fusion cannot be achieved does not occur.

It should be noted that, in the embodiment shown in FIG. 11, the three-dimensional image data is first processed by using a coordinate conversion matrix to obtain the first planar image and the second planar image, and then translation is performed on the first planar image and/or the second planar image. In some other embodiments, the coordinate conversion matrix may be adjusted first, and then the three-dimensional image data is processed by using the adjusted coordinate conversion matrix to obtain a planar image. The planar image obtained in this manner does not need to be translated, because the coordinate conversion matrix is adjusted, the obtained planar image is an image that has been translated.

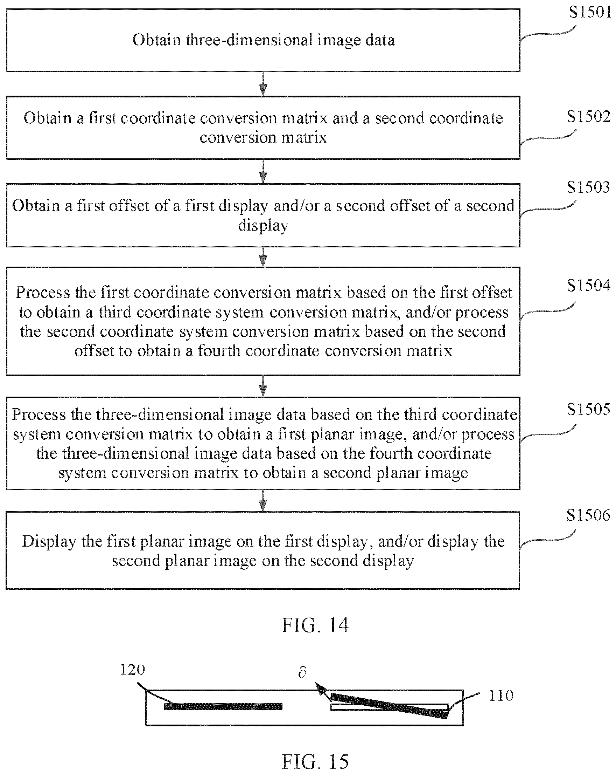

For example, FIG. 14 is another schematic flowchart of a display method according to an embodiment of this application. The process includes the following steps.

S1501: Obtain three-dimensional image data.

S 1502: Obtain a first coordinate conversion matrix and a second coordinate conversion matrix. The first coordinate conversion matrix is used to convert the three-dimensional image data into a first planar image, and the second coordinate conversion matrix is used to convert the three-dimensional image data into a second planar image. The first planar image is displayed on a first display component, and the second planar image is displayed on a second display component.

S1503: Obtain a first offset of the first display component and/or a second translation of the second display component of VR glasses.

For an implementation principle of S1501 to S1503, refer to an implementation principle of S1101 to S1103 in FIG. 11. Details are not described again.

S1504: Process the first coordinate conversion matrix based on the first offset to obtain a third coordinate system conversion matrix, and/or process the second coordinate system conversion matrix based on the second translation to obtain a fourth coordinate conversion matrix.

For example, the first coordinate conversion matrix is the following matrix:

$$\begin{pmatrix} \dfrac{2n}{r-l} & 0 & \dfrac{r+l}{r-l} & 0 \\ 0 & \dfrac{2n}{t-b} & \dfrac{t+b}{t-b} & 0 \\ 0 & 0 & \dfrac{-(f+n)}{f-n} & \dfrac{-2fn}{f-n} \\ 0 & 0 & -1 & 0 \end{pmatrix}$$

It is assumed that the first offset is (-x/2, y/2), and l, r, t, and b in the first coordinate conversion matrix are updated to l - x/2, r - x/2, t + y/2, and b + y/2, and then are brought into the first coordinate conversion matrix. A third coordinate conversion matrix is obtained as follows:

$$\left\{ \begin{array}{cccc} \dfrac{2n}{r-\left(l-\frac{x}{2}\right)} & 0 & \dfrac{\left(r-\frac{x}{2}\right)+\left(l-\frac{x}{2}\right)}{\left(r-\frac{x}{2}\right)-\left(l-\frac{x}{2}\right)} & 0 \\ 0 & \dfrac{2n}{\left(t+\frac{y}{2}\right)-\left(b+\frac{y}{2}\right)} & \dfrac{\left(t+\frac{y}{2}\right)+\left(b+\frac{y}{2}\right)}{\left(t+\frac{y}{2}\right)-\left(b+\frac{y}{2}\right)} & 0 \\ \mathbf{0} & \mathbf{0} & \dfrac{-(f+n)}{f-n} & \dfrac{-2fn}{f-n} \\ 0 & 0 & -1 & 0 \end{array} \right\}$$

In the foregoing, that the third coordinate conversion matrix is obtained based on the first coordinate conversion matrix is used as an example. A principle of obtaining a fourth coordinate conversion matrix based on the second coordinate conversion matrix is the same. Details are not described herein again.

S1505: Process the three-dimensional image data based on the third coordinate system conversion matrix to obtain the first planar image, and/or process the three-dimensional image data based on the fourth coordinate system conversion matrix to obtain the second planar image.

The first planar image and the second planar image do not need to be translated.

S1506: Display the first planar image on the first display component, and/or display the second planar image on the second display component.

In embodiments of this application, a distance may be represented by a quantity of pixels. For example, in FIG. 9, the distance L9 and the distance L10 may be represented by pixels, and the distance L9 may be represented that there are M1 pixels between the center point P9 of the overlapping region 9110 and the center point R9 of the image 9100. The distance L10 may be represented that there are M2 pixels between the center point P10 of the overlapping region 9210 and the center point R1 of the image 9200. If M1 is not equal to M2, the distance L9 is not equal to the distance L10.

It should be noted that in the foregoing embodiments, for example, the first display component 110 or the second display component 120 moves in a horizontal direction, a center W1 of a left eyeball of the user cannot be aligned with a center point S1 of the second display component 120; or a center W2 of a right eyeball cannot be aligned with a center point S2. In another embodiment, the first display component 110 or the second display component 120 may alternatively move in another direction, for example, the first display component 110 or the second display component 120 moves in an up-down direction. Therefore, the center W1 of the left eyeball of the user cannot be aligned with the center point S1 of the second display component 120, or the center W2 of the right eyeball cannot be aligned with the center point S2. Alternatively, refer to FIG. 15. The first display component 110 rotates by an angle $\partial$. In this case, an image displayed on the first display component 110 has a projection image in the horizontal direction, and a center point of the projection image can be aligned with the center W2 of the right eyeball.

In the foregoing embodiments, a VR scenario is mainly used as an example, that is, a VR head-mounted display device performs the display method in this specification. For an AR scenario, an AR head-mounted display device may perform the display method in this specification. The AR head-mounted display device may be AR glasses or the like. For example, the AR glasses include a light engine for projecting image light. Light emitted by the light engine can be introduced into an in-coupling grating of a lens of the AR glasses, and exported into a human eye at an out-coupling grating position of the lens, so that the user can view a virtual image corresponding to the image. The display method provided in this specification can be used for AR glasses with assembly tolerance between the light engine and the in-coupling grating.

The AR glasses include monocular display AR glasses and binocular display AR glasses. In the monocular display AR glasses, an optical waveguide structure is used in at least a partial region of a lens of two lenses. In the binocular display AR glasses, at least a partial region of both lenses uses the optical waveguide structure. The optical waveguide (optical waveguide) is a dielectric apparatus that guides propagation of optical waves therein, and is also referred to as a dielectric optical waveguide. In some embodiments, the optical waveguide refers to an optical element that uses a principle of total reflection to guide optical waves for total reflection propagation in itself. A common waveguide substrate may be a guided structure that is formed by an optical transparency medium (such as quartz glass) and that transmits an optical frequency electromagnetic wave.

Although this specification is described with reference to some embodiments, it does not mean that a characteristic of this application is limited only to this implementation. On the contrary, a purpose of describing this application with reference to an implementation is to cover another option or modification that may be derived based on claims of this specification. To provide an in-depth understanding of this specification, the following descriptions include a plurality of specific details. This specification may be alternatively implemented without using these details. In addition, to avoid confusion or blurring the focus of this specification, some specific details will be omitted from the description. It should be noted that, in a case of no conflict, embodiments in this specification and the features in the embodiments may be mutually combined.

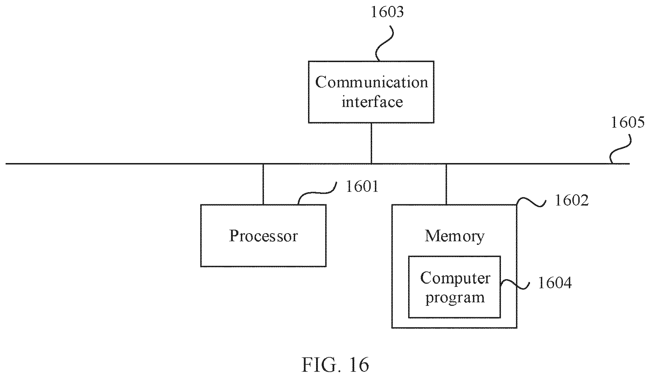

FIG. 16 is an electronic device 1600 according to an embodiment of this application. The electronic device 1600 may be the foregoing VR head-mounted display device. As shown in FIG. 16, the electronic device 1600 may include one or more processors 1601, one or more memories 1602, a communication interface 1603, and one or more computer programs 1604. The foregoing components may be connected to each other through one or more communication buses 1605. The one or more computer programs 1604 are stored in the memory 1602 and are configured to be executed by the one or more processors 1601, the one or more computer programs 1604 include instructions, and the foregoing instructions may be used to perform related steps of the mobile phone in the foregoing corresponding embodiment. The communication interface 1603 is configured to implement communication with another device. For example, the communication interface may be a transceiver.

In the foregoing embodiments provided in this application, the method provided in embodiments of this application is described from a perspective of an electronic device (for example, the VR head-mounted display device) as an execution body. To implement functions in the methods provided in embodiments of this application, the electronic device may include a hardware structure and/or a software module, and implement the foregoing functions in a form of a hardware structure, a software module, or a hardware structure plus a software module. Whether a function in the foregoing functions is performed by using the hardware structure, the software module, or the hardware structure plus the software module depends on a specific application and a design constraint condition of the technical solution.

According to the context, the term "when" or "after" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the above-described embodiments, relational terms such as first and second are used to distinguish an entity from another entity, without limiting any actual relationship and order between these entities.

References to "one embodiment" or "some embodiments" or the like described in this specification mean that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instruction is loaded and executed on the computer, the procedure or functions according to embodiments of this present invention are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like. In a case in which no conflict occurs, the solutions in the foregoing embodiments may be combined for use.

It should be noted that a part of this patent application document includes copyright-protected content. The copyright owner reserves the copyright except copies are made for the patent documents or the recorded content of the patent documents in the Patent Office.

## Claims

1. A display method, applied to an electronic device, wherein the electronic device comprises a first display and a second display, and the method comprises:

   displaying a first image through the first display, wherein the first display corresponds to a first eye of a user; and
   displaying a second image through the second display, wherein the second display corresponds to a second eye of the user, wherein
   an overlapping region exists on each of the first image and the second image, and the overlapping region comprises at least one same object;
   on the first image, a center point of the overlapping region is located at a first position;
   on the second image, the center point of the overlapping region is located at a second position;
   a distance from the first position to a center point of the first image is a first distance, a distance from the second position to a center point of the second image is a second distance, a direction from the first position to the center point of the first image is a first direction, and a direction from the second position to the center point of the second image is a second direction; and
   the first distance is not equal to the second distance, and/or the first direction is different from the second direction.

2. The method according to claim 1, wherein the electronic device further comprises a first optical device and a second optical device, the first optical device corresponds to the first display, the second optical device corresponds to the second display, and the first optical device and the second optical device are symmetrical relative to a middle plane; and
   the first position and the second position are symmetrical relative to the middle plane.

3. The method according to claim 2, wherein the first display and the second display are asymmetrical relative to the middle plane.

4. The method according to claim 2 or 3, wherein the electronic device is a head-mounted display device, and when the electronic device is worn by the user, the first display is located on a side that is of the first optical device and that faces away from the first eye, and the second display is located on a side that is of the second optical device and that faces away from the second eye.

5. The method according to claim 1, wherein the electronic device is a head-mounted display device, and when the electronic device is worn by the user, the first position and the second position are symmetrical relative to a center line of a face of the user.

6. The method according to claim 5, wherein the first display and the second display are asymmetrical relative to the center line of the face.

7. The method according to any one of claims 1 to 6, wherein the first position changes with a position of the first display.

8. The method according to claim 7, wherein when the first display moves in a third direction, the overlapping region on the first image moves in a direction opposite to the third direction.

9. The method according to any one of claims 1 to 8, wherein the second position changes with a position of the second display.

10. The method according to claim 9, wherein when the second display moves in a fourth direction, the overlapping region on the second image moves in a direction opposite to the fourth direction.

11. The method according to any one of claims 1 to 10, wherein

before the displaying a first image through the first display and the displaying a second image through the second display, the method further comprises: adjusting an interpupillary distance for the first display and the second display, wherein the interpupillary distance adjustment comprises: the first display moves by a specific distance in a fifth direction, and the second display moves by the same distance in a sixth direction opposite to the fifth direction; and the fifth direction is a direction in which the first display moves away from the second display, or the fifth direction is a direction in which the first display approaches the second display; and

a distance difference between the first distance and the second distance remains unchanged compared with that before the interpupillary distance adjustment, and a relative relationship between the first direction and the second direction remains unchanged compared with that before the interpupillary distance adjustment.

12. The method according to any one of claims 1 to 11, wherein the at least one same object comprises a first object and a second object;

on the first image, a first feature point of the first object is at first coordinates, and a second feature point of the second object is at second coordinates;
on the second image, the first feature point of the first object is at third coordinates, and the second feature point of the second object is at fourth coordinates; and
a coordinate difference between the first coordinates and the third coordinates is different from a coordinate difference between the second coordinates and the fourth coordinates.

13. The method according to claim 12, wherein the method further comprises:
when at least one of the following conditions is met, the coordinate difference between the first coordinates and the third coordinates is greater than the coordinate difference between the second coordinates and the fourth coordinates, wherein the conditions comprise:

the first object is located in a region in which a point of gaze of the user is located, and the second object is located outside the region in which the point of gaze of the user is located;
the first object and the second object are both located in a region in which a point of gaze of the user is located, and the second object is closer to an edge of the region in which the point of gaze of the user is located than the first object;
a distance between the first object and the center point of the first image is less than a distance between the second object and the center of the second image;
a quantity of times of user interaction corresponding to the first object is greater than a quantity of times of user interaction corresponding to the second object; or
the first object is a user-specified object, and the second object is not a user-specified object.

**14.** The method according to claim 1, wherein the electronic device comprises a first display module and a second display module, the first display module comprises the first display and a first optical device, the second display module comprises the second display and a second optical device, a first offset exists between a position of the first display and a position of the first optical device, and a second offset exists between a position of the second display and a position of the second optical device; and the method further comprises:

obtaining three-dimensional image data;
obtaining a first coordinate conversion matrix and a second coordinate conversion matrix, wherein the first coordinate conversion matrix corresponds to the first optical device, and the second coordinate conversion matrix corresponds to the second optical device;
obtaining the first offset and the second offset;
processing the three-dimensional image data into the first image based on the first coordinate conversion matrix and the first offset; and
processing the three-dimensional image data into the second image based on the second coordinate conversion matrix and the second offset.

**15.** The method according to claim 14, wherein

when a position of the first display module changes, the first coordinate conversion matrix changes; or
when a position of the second display module changes, the second coordinate conversion matrix changes.

**16.** A display method, applied to an electronic device, wherein the electronic device comprises a first display module and a second display module, the first display module comprises a first display and a first optical device, the second display module comprises a second display and a second optical device, a first offset exists between a position of the first display and a position of the first optical device, and a second offset exists between a position of the second display and a position of the second optical device; and the method further comprises:

obtaining three-dimensional image data;
obtaining a first coordinate conversion matrix and a second coordinate conversion matrix, wherein the first coordinate conversion matrix corresponds to the first optical device, and the second coordinate conversion matrix corresponds to the second optical device;
obtaining the first offset and the second offset;
processing the three-dimensional image data into a first image based on the first coordinate conversion matrix and the first offset, and displaying, by the first display module, the first image; and
processing the three-dimensional image data into a second image based on the second coordinate conversion matrix and the second offset, and displaying, by the second display module, the second image.

**17.** The method according to claim 16, wherein when a position of the first display module changes, the first coordinate conversion matrix changes; or
when a position of the second display module changes, the second coordinate conversion matrix changes.

**18.** An electronic device, comprising:

a processor, a memory, and one or more programs, wherein
the one or more programs are stored in the memory, the one or more programs comprise instructions, and when the instructions are executed by the processor, the electronic device is enabled to perform the method according to any one of claims 1 to 15 or according to either of claim 16 and claim 17.

**19.** A computer-readable storage medium, wherein the computer-readable storage medium is configured to store a computer program; and when the computer program is run on a computer, the computer is enabled to perform the method according to any one of claims 1 to 15 or according to either of claim 16 and claim 17.

**20.** A computer program product, comprising a computer program, wherein when the computer program is run on a computer, the computer is enabled to perform the method according to any one of claims 1 to 15 or according to either of claim 16 and claim 17.

FIG. 1

FIG. 2A

120   2   1   110

140   130

Left eye   Right eye

FIG. 2B

VR head-mounted display device 100

170   180   190   106

Communication module   Camera   Battery   Optical display module

160

101

Button   Processor   Input/Output interface

150   Eye tracking module   105

Microphone   Sensor module   Memory

104   103   102

FIG. 3A

| Gallery 211 | Game 212 | ... | Application layer 210 |

| Resource manager 221 | View system 222 | ... | Application framework layer 220 |

| Surface manager 241 | Three-dimensional graphics processing library 243 | VR algorithm integration module 245 | Android runtime 230 | System library 240 |
| Media library 242 | Two-dimensional graphics engine 244 | | ... | |

| Display driver 251 | Camera driver 252 | Sensor driver 254 | Kernel layer 250 |
| Audio driver 253 | | ... | |

| Acceleration sensor 201 | Gravity sensor 202 | Touch sensor 203 | Hardware layer 260 |
| First display device 110 | Second display device 120 | ... | |

FIG. 3B

Human eye

FIG. 4A

FIG. 4B

FIG. 5

FIG. 6A

FIG. 6B

FIG. 7A

FIG. 7B

Second display device 120

First display device 110

Region 4

Region 3

8100

Region 1

Region 2

8200

N5

S1

N4

S2

W1

W2

Left eye

Right eye

8300

T7

8400

T8

FIG. 8A

Second display device 120

First display device 110

Region 3

Region 4

8100

Region 5

Region 2

8200

S1

S2' S2

N6

W1

W2

Left eye

Right eye

8300

8400

T7

T8

FIG. 8B

FIG. 9

FIG. 10

Obtain three-dimensional image data

S1101

VR glasses obtain a first coordinate conversion matrix and a second coordinate conversion matrix

S1102

Process the three-dimensional image data based on the first coordinate conversion matrix to obtain a first planar image, and process the three-dimensional image data based on the second coordinate conversion matrix to obtain a second planar image

S1103

Obtain a first offset of a first display and/or a second offset of a second display

S1104

Process the first planar image based on the first offset to obtain a third planar image, and/or process the second planar image based on the second offset to obtain a fourth planar image

S1105

The first display displays the third planar image, and the second display displays the fourth planar image

S1106

FIG. 11

FIG. 12A

FIG. 12B

FIG. 12C

FIG. 13

Obtain three-dimensional image data ⟋ S1501

Obtain a first coordinate conversion matrix and a second coordinate conversion matrix ⟋ S1502

Obtain a first offset of a first display and/or a second offset of a second display ⟋ S1503

Process the first coordinate conversion matrix based on the first offset to obtain a third coordinate system conversion matrix, and/or process the second coordinate system conversion matrix based on the second offset to obtain a fourth coordinate conversion matrix ⟋ S1504

Process the three-dimensional image data based on the third coordinate system conversion matrix to obtain a first planar image, and/or process the three-dimensional image data based on the fourth coordinate system conversion matrix to obtain a second planar image ⟋ S1505

Display the first planar image on the first display, and/or display the second planar image on the second display ⟋ S1506

FIG. 14

120     $\partial$     110

FIG. 15

1603

Communication
interface

1605

1601

Processor

1602

Memory

Computer
program

1604

FIG. 16

## INTERNATIONAL SEARCH REPORT

| International application No. |
|---|
| **PCT/CN2022/127013** |

**A. CLASSIFICATION OF SUBJECT MATTER**

G06F 3/01(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, CNKI, VEN, ENTXTC, ENTXT: 显示屏, 眼, 重叠, 中心点, 图像, 距离, 方向, 不对称, VR, display screen, eye, overlay, center point, image, distance, direction, asymmetry

**C. DOCUMENTS CONSIDERED TO BE RELEVANT**

| Category* | Citation of document, with indication, where appropriate, of the relevant passages | Relevant to claim No. |
|---|---|---|
| X | US 2019349576 A1 (DELL PRODUCTS L.P.) 14 November 2019 (2019-11-14) description, paragraphs 4-28 and 41-67, and figures 1-7 | 1-20 |
| A | CN 106204431 A (SHENZHEN INSTITUTES OF ADVANCED TECHNOLOGY, CHINESE ACADEMY OF SCIENCES) 07 December 2016 (2016-12-07) entire document | 1-20 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2023** | **11 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127013**

| Patent document cited in search report | | | Publication date (day/month/year) | Patent family member(s) | | | Publication date (day/month/year) |
|---|---|---|---|---|---|---|---|
| US | 2019349576 | A1 | 14 November 2019 | US | 10491890 | B1 | 26 November 2019 |
| CN | 106204431 | A | 07 December 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111338178